# EUROPEAN PATENT SPECIFICATION

(11) **EP 4 224 895 B1**
(45) Date of publication and mention of the grant of the patent: **25.06.2025**
(21) Application number: 21893902.3
(22) Date of filing: 16.11.2021
(51) Int. Cl.: H04W 4/12, H04W 56/00, H04L 67/1095, H04L 51/063, H04L 69/08

(54) **FONT LIBRARY SYNCHRONIZATION METHOD AND APPARATUS, AND STORAGE MEDIUM**
VERFAHREN UND VORRICHTUNG ZUR SYNCHRONISIERUNG EINER SCHRIFTARTBIBLIOTHEK UND SPEICHERMEDIUM
PROCÉDÉ ET APPAREIL DE SYNCHRONISATION DE BIBLIOTHÈQUES DE POLICES DE CARACTÈRES, ET SUPPORT DE STOCKAGE

(30) Priority: 17.11.2020 CN 202011284586
(43) Date of publication of application: 09.08.2023
(73) Proprietor: Huawei Technologies Co., Ltd., Shenzhen, Guangdong 518129 (CN)
(72) Inventor: WANG, Zhangjun, Shenzhen, Guangdong 518129 (CN); LIU, Chao, Shenzhen, Guangdong 518129 (CN)
(74) Representative: Isarpatent
(86) International application number: PCT/CN2021/130963
(87) International publication number: WO 2022/105755

(56) References cited:
- CN-A- 106 569 984
- CN-A- 107 451 155
- CN-A- 108 804 066
- CN-A- 110 430 325
- CN-B- 106 569 984
- US-A1- 2011 269 424

## Description

### TECHNICAL FIELD

This application relates to the field of electronic devices, and in particular, to a font library synchronization method and apparatus, and a non-volatile computer-readable storage medium.

### BACKGROUND

Font libraries are classified into vector font libraries and dot matrix font libraries. The vector font library includes a plurality of vector fonts. Each word in the vector font is described by using a mathematical equation, and the word is not deformed when being scaled. The dot matrix font library includes a plurality of dot matrix fonts, where each word is displayed by using two-dimensional pixel information, and an edge of an enlarged word has jaggies.

As terminal devices, especially wearable devices such as smartwatches and smart bands, and various lightweight devices such as ATMs (Automatic Teller Machines, automatic teller machines) with small storage capabilities and weak processing capabilities need to support an increasing quantity of language types and an increasing quantity of message types that need to be displayed, a challenge is posed to font library storage capabilities of the terminal devices.

CN 106 569 984 B discloses a method, apparatus and system for automatically generating and transmitting a color font.

US 2011/269424 A1 discloses the transference of data between two systems independent of the form in which the data is kept on the respective systems, and in particular to providing an efficient means of communicating data between systems and devices.

### SUMMARY

In view of this, this application provides a font library synchronization method, a font library synchronization apparatus, and a non-volatile computer-readable storage medium, as defined in the appended set of claims.

### BRIEF DESCRIPTION OF DRAWINGS

The accompanying drawings included in this specification and constituting a part of this specification and this specification jointly show example embodiments, features, and aspects of this application, and are intended to explain principles of this application.
FIG. 1 is a schematic diagram of an application scenario according to an embodiment of this application;
FIG. 2 is a schematic flowchart of a font library synchronization method according to an embodiment of this application;
FIG. 3 is a schematic diagram of an initialization procedure, a font library update procedure, a font library aging procedure, and a font library upgrade procedure in a font library synchronization method according to an embodiment of this application;
FIG. 4 is a flowchart of a font library synchronization method according to an embodiment of this application;
FIG. 5 is a flowchart of a font library synchronization method according to an embodiment of this application;
FIG. 6 is a flowchart of a font library synchronization method according to an embodiment of this application;
FIG. 7 is a flowchart of a font library synchronization method according to an embodiment of this application;
FIG. 8 is a flowchart of a font library synchronization method according to an embodiment of this application;
FIG. 9 is a flowchart of a font library synchronization method according to an embodiment of this application;
FIG. 10 is a flowchart of a font library synchronization method according to an embodiment of this application;
FIG. 11 is a flowchart of a font library synchronization method according to an embodiment of this application;
FIG. 12 is a schematic diagram of a structure of a font library synchronization apparatus according to an embodiment of this application;
FIG. 13 is a schematic diagram of a structure of a font library synchronization apparatus according to an embodiment of this application;
FIG. 14 is a schematic diagram of a structure of a terminal device according to another embodiment of this application; and
FIG. 15 is a block diagram of a software structure of a terminal device according to an embodiment of this application.

### DESCRIPTION OF EMBODIMENTS

The following describes various example embodiments, features, and aspects of this application in detail with reference to the accompanying drawings. Identical reference numerals in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, an embodiment, or an illustration". Any embodiment described as "example" is not necessarily explained as being superior or better than other embodiments.

In addition, to better describe this application, numerous specific details are provided in the following specific implementations. A person skilled in the art should understand that this application can also be implemented without some specific details. In some embodiments, methods, means, elements, and circuits that are well-known to a person skilled in the art are not described in detail, so that the subject matter of this application is highlighted.

For a lightweight device with a small storage capability and a weak processing capability, for example, a wearable device, in a conventional technology, all supported-language-related font libraries are usually preset on the wearable device at a time, and sufficient storage space is reserved for the font libraries in a product resource planning phase. However, brought problems are as follows: As services grow, the font libraries of the wearable device need to occupy more physical storage space, and upgrade duration in production and use is also increased. In addition, when different products support different languages, font library resource plans are different, which increases maintenance costs. Another method in the conventional technology is to reduce a quantity of languages supported by the wearable device, to reduce storage space occupied by a font library. Problems caused by this are that content cannot be displayed or abnormally displayed when the wearable device encounters a language that is not supported, and the wearable device needs to preset different font libraries based on an actual situation, increasing production and maintenance costs. In the conventional technology, there is still another method: Before a notification message is sent to the wearable device, message content is extracted, and each word in the message is converted into an index number and a black-and-white bitmap file. When the message is transmitted to the wearable device, an index number sequence of words and a packaged and compressed black-and-white bitmap file folder are directly transmitted. The wearable device directly extracts a black-and-white bitmap in the folder for display. However, in this case, each time the notification message is displayed, data of the black-and-white bitmap needs to be transmitted to the wearable device, and a data transmission amount is large. If a large amount of repeated content exists in messages, transmission efficiency is low and resources are wasted. In addition, this method only resolves word display in a notification message scenario, and cannot resolve problems of word display in a multi-language environment and an excessively large font library of the wearable device in another scenario.

To resolve the foregoing technical problems, embodiments of this application provide a font library synchronization method. According to the font library synchronization method in embodiments of this application, a first terminal device can generate corresponding font library data based on a requirement of a second terminal device, synchronize the corresponding font library data to the second terminal device, perform aging processing on a font library of the second terminal device, and automatically control, based on a requirement, storage space occupied by the font library of the second terminal device, and can further replace system upgrade with font library upgrade. In this way, the second terminal device can be prevented from carrying a full international dot-matrix font library, and needs to carry only a small amount of font library data before delivery, to reduce an installation package, and improve production efficiency. This reduces storage space occupied by the font library of the second terminal device, and reduces related hardware costs, thereby improving overall product resource planning and competitiveness. When an amount of font library data required for displaying by the second terminal device is increasing, the storage space occupied by the font library of the second terminal device is controlled, so that the storage space occupied by the font library is kept at a proper size. Moreover, sufficient storage space may be reserved for upgrading the font library by automatically updating the font library. In this way, the font library of the second terminal device can be self-maintained, thereby reducing maintenance costs.

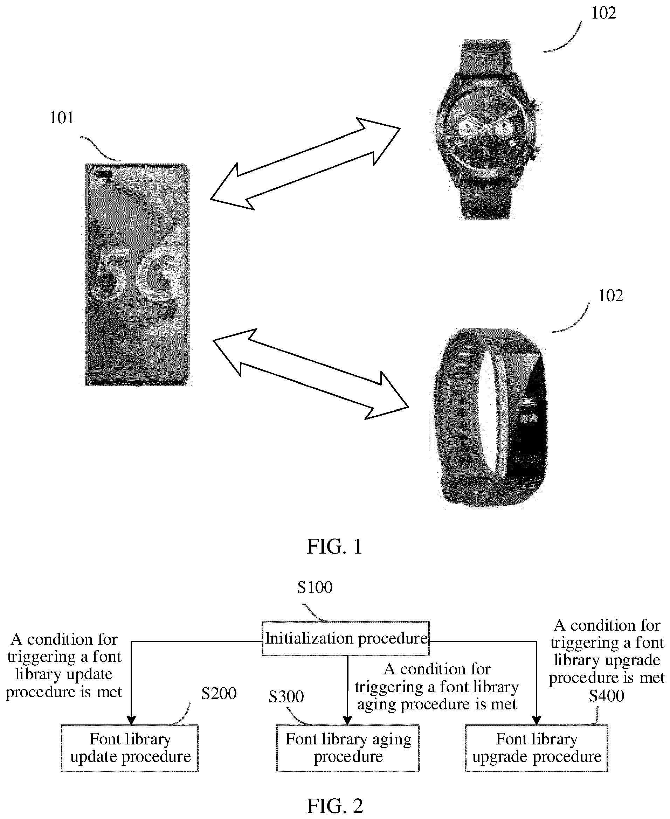

FIG. 1 is a schematic diagram of an application scenario according to an embodiment of this application. In a possible implementation, the font library synchronization method provided in embodiments of this application may be applied to a scenario including a first terminal device and a second terminal device. The first terminal device may include a terminal device that has a strong storage capability and that is insensitive to power consumption, for example, a smartphone, a netbook, a tablet computer, or a notebook computer. The second terminal device may include a lightweight terminal device that needs to display related content by using a font library and that has a small storage capability and a weak processing capability, for example, a wearable device, an ATM machine, and a non-smartphone. Alternatively, the first terminal device and the second terminal device may be devices with similar performance, for example, may be both smartphones, or may be a notebook computer and a smartphone. Types of the first terminal device and the second terminal device herein are not limited in this application.

The following uses an application scenario including a terminal device with a strong storage capability (terminal device for short) and a wearable device with a weak storage capability as an example for description. A person skilled in the art should understand that embodiments of this application are not limited to this application scenario.

As shown in FIG. **1****,** the font library synchronization method provided in embodiments of this application may be applied to a terminal device 101 and a wearable device 102. The terminal device and the wearable device may be devices with a wireless connection function. The wireless connection function means that the terminal device and the wearable device may be connected to each other in a wireless connection manner such as Wi-Fi or Bluetooth. The terminal device and the wearable device may also have a function of communicating through a wired connection. The terminal device in embodiments of this application may be a touchscreen device, may be a non-touchscreen device, or may be a device without a screen. The touchscreen terminal device may be controlled by tapping or sliding on a display screen by using a finger, a stylus, or the like. The non-touchscreen device may be connected to an input device such as a mouse, a keyboard, or a touch panel, and the terminal device is controlled by using the input device. The device without a screen may be, for example, a Bluetooth speaker without a screen. For example, the terminal device in this application may be a smartphone, a netbook, a tablet computer, a notebook computer, a TV, a virtual reality device, an acoustic device, or an electronic ink. The wearable device in embodiments of this application may be a smart band or a smartwatch, or may be another device. The wearable device may be worn by a user, may be connected to the terminal device for communication, and may display a corresponding symbol by invoking font library data. In a possible implementation, one terminal device may be connected to one or more wearable devices. After the terminal device is connected to the wearable device, according to the font library synchronization method provided in embodiments of this application, information and font library data can be transmitted between the terminal device and the wearable device, to manage a font library of the wearable device, so that content of a notification message sent by the terminal device to the wearable device can be normally displayed on the wearable device, and a font library data storage amount of the wearable device is reduced, to reduce requirements on the storage space of the wearable device.

FIG. 2 is a schematic flowchart of a font library synchronization method according to an embodiment of this application. As shown in FIG. 2, in the example application scenario shown in FIG. **1****,** a procedure of the font library synchronization method according to this embodiment of this application includes the following steps.

In step S100, an initialization procedure is performed. For example, when a user purchases a wearable device and uses it for the first time, or after the user resets the wearable device and restores initial factory settings, the wearable device may carry only a small amount of initial font library data. The wearable device may establish a connection to a terminal device by performing the initialization procedure, and the wearable device obtains initial font library data from the terminal device after the terminal device performs initial synchronization on a font library of the wearable device.

When a condition for triggering a font library update procedure is met, step S200 is performed. In step S200, the font library update procedure is performed. In the font library update procedure, the font library of the wearable device may be updated by the terminal device according to a display requirement or settings of the user.

For example, in a process of using the wearable device, the terminal device may need to send a message to the wearable device, and the message (for example, a system notification or an instant messaging message) needs to be displayed on the wearable device. If the terminal device identifies that a part of font library data required for displaying the message has not been synchronized to the font library of the wearable device, that is, the font library of the wearable device does not include the part of the font library data for displaying the part of the message, the font library update procedure of step S200 may be performed. The terminal device updates the font library of the wearable device, so that the font library of the wearable device includes the part of the font library data required for displaying the part of the message. For another example, the user may manually trigger the font library update procedure on the terminal device or the wearable device, so that the terminal device updates a language, a font, a font size, and the like displayed on the wearable device.

When a condition for triggering a font library aging procedure is met, step S300 is performed to perform the font library aging procedure. In the font library aging procedure, aging processing may be performed on font library data in the wearable device, to delete some font library data, thereby reducing occupation of storage space. For example, aging processing may be periodically performed on font library data with a low usage rate on the wearable device, or aging processing may be performed on font library data with a low usage frequency when a storage amount of the font library data in the wearable device is excessively large.

When a condition for triggering a font library upgrade procedure is met, step S400 is performed, to perform the font library upgrade procedure. For example, during system upgrade of the wearable device, the wearable device may need to add new font library data, and the font library upgrade procedure may be performed, to help the wearable device complete font library upgrade by using the terminal device.

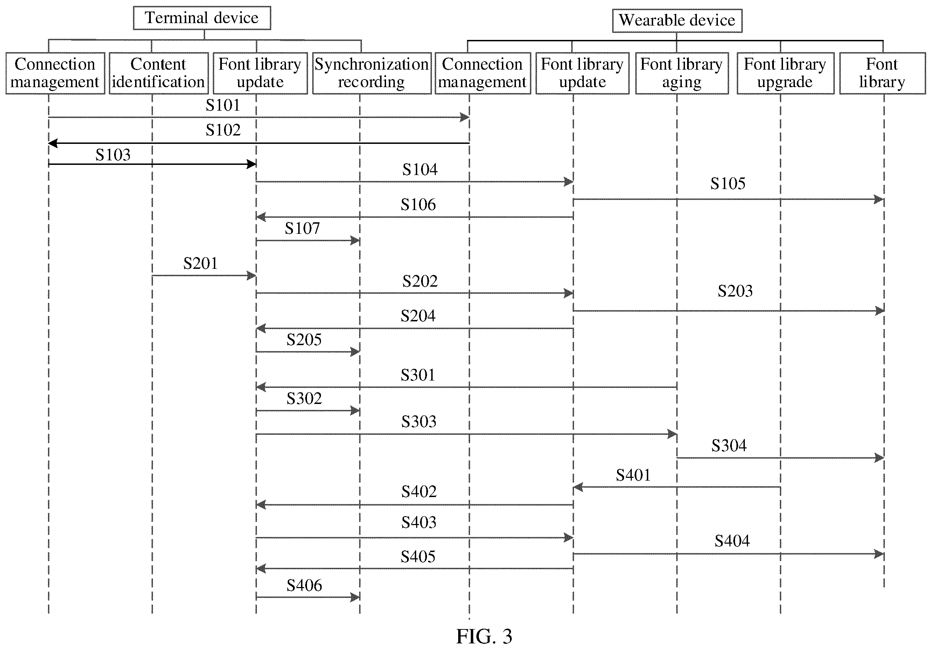

FIG. 3 is a schematic diagram of an initialization procedure, a font library update procedure, a font library aging procedure, and a font library upgrade procedure in a font library synchronization method according to an embodiment of this application. It should be noted that, in this embodiment of this application, a sequence of performing the initialization procedure, the font library update procedure, the font library aging procedure, and the font library upgrade procedure is not limited. As shown in FIG. 3, a terminal device may include a connection management module, a content identification module, a font library update module, and a synchronization recording module, and a wearable device may include a connection management module, a font library update module, a font library aging module, a font library upgrade module, and a font library. Division, functions, and communication manners of the modules in the terminal device and the wearable device shown in FIG. 3 are merely examples. This is not limited in this embodiment of this application.

As shown in FIG. 3, the initialization procedure may include the following steps.

Step S101: The connection management module of the terminal device sends a pairing and connection request to the connection management module of the wearable device.

The pairing may be that the wearable device and the terminal device are connected to each other in a wireless connection manner such as Wi-Fi or Bluetooth. For example, when the wearable device is to be paired with the terminal device based on a Bluetooth connection protocol, the terminal device may scan a two-dimensional code displayed on the wearable device, and send a pairing and connection request to the wearable device, where the pairing and connection request may include a pairing code.

Step S102: The connection management module of the wearable device sends a pairing success notification and initial information to a connection management module of the terminal device. For example, the terminal device may send a pairing code to the wearable device to confirm a connection. After the connection succeeds, the wearable device may send a pairing success notification to the terminal device for display on the terminal device, and a user may perform a subsequent operation after a pairing success is displayed.

The initial information may include initial font library data information of the wearable device. The wearable device may include initial font library data in an initial state (for example, in a factory setting), and the initial font library data information may include one or more of a language, an encoding range, a font, and a font size of the initial font library data.

Step S103: The connection management module of the terminal device determines an initial language of the wearable device based on the received initial information, and sends, when a current language of the terminal device is inconsistent with the initial language of the wearable device, the current language of the terminal device to the font library update module of the terminal device.

The current language of the terminal device is a language currently used by the terminal device, or a currently selected language. For example, the user may set or select the current language of the terminal device on the terminal device. The initial language of the wearable device may be one or more languages.

When the current language of the terminal device is consistent with the initial language of the wearable device, the terminal device may include the initial font library data information in a font library synchronization record corresponding to the wearable device, and does not perform a font library synchronization operation on the wearable device, and the wearable device may perform display based on the initial font library data.

Step S104: The font library update module of the terminal device generates corresponding font library data and sends the corresponding font library data to the font library update module of the wearable device.

The font library update module of the terminal device may form font library data information of the corresponding font library data based on the current language of the terminal device and the font and the font size that are included in the initial information, and generate the corresponding font library data based on the font library data information. The generated font library data may be dot matrix font library data or another type of font library data, and may be automatically generated by using a local vector font library of the terminal device. In a possible implementation, when the terminal device does not have the vector font library necessary for generating the dot matrix font library data, the vector font library may be downloaded via a cloud server of the terminal device.

Step S105: The font library update module of the wearable device adds the received font library data to a font library of the wearable device.

The font library update module of the wearable device may add the received font library data to the font library of the wearable device based on a manner of organizing and maintaining the font library. In a possible implementation, a corresponding dot matrix may be obtained by indexing a character code, and the received font library data is added to the font library of the wearable device.

Step S106: The font library update module of the wearable device sends a synchronization completion notification to the font library update module of the terminal device.

Step S107: The font library update module of the terminal device notifies the synchronization recording module to update the font library synchronization record corresponding to the wearable device.

Because the terminal device may be connected to one or more wearable devices, in response to a received synchronization completion notification, the terminal device may determine a wearable device whose font library synchronization record needs to be updated, and update, based on the font library data information of the added font library data, a font library synchronization record of the wearable device corresponding to the received synchronization completion notification, to record synchronization of the font library data to the wearable device.

As shown in FIG. 3, the font library update procedure may include the following steps.

Step S201: The content identification module of the terminal device sends, to the font library update module of the terminal device, font library data information of font library data that has not been synchronized to the wearable device.

The font library data information may include a language, an encoding range, a font, and a font size. For example, the terminal device intends to send a message to the wearable device, and display the message on the wearable device. When the content identification module identifies that the wearable device cannot display an English letter in the message (for example, the content identification module determines, based on the font library synchronization record, that an English font library has not been synchronized in the wearable device), English and the default font and the default font size that are in the initial information sent by the wearable device may form the font library data information.

Step S202: The font library update module of the terminal device generates corresponding font library data and sends the corresponding font library data to the font library update module of the wearable device.

The font library update module of the terminal device may form font library data information of the corresponding font library data based on the font library data information of the font library data that has not been synchronized to the wearable device and the initial information of the wearable device, and generate the corresponding font library data based on the font library data information.

Step S203: The font library update module of the wearable device adds the received font library data to the font library of the wearable device.

Step S204: The font library update module of the wearable device sends a synchronization completion notification to the font library update module of the terminal device.

Step S205: The font library update module of the terminal device notifies the synchronization recording module to update the font library synchronization record corresponding to the wearable device.

The font library aging procedure may include the following steps.

Step S301: The font library aging module of the wearable device sends aging information to the font library update module of the terminal device.

The font library aging procedure may be triggered by using the font library aging module of the wearable device, and the aging information may include font library data information of font library data that meets a deletion condition in font library data of the wearable device.

Step S302: The font library update module of the terminal device notifies the synchronization recording module to delete a synchronization record corresponding to the wearable device.

Because the terminal device may be connected to one or more wearable devices, in response to received aging information, the font library update module of the terminal device may determine a wearable device whose font library synchronization record needs to be updated, and notify the synchronization recording module to update the corresponding font library synchronization record of the wearable device based on font library data information of font library data that needs to be deleted.

Step S303: The font library update module of the terminal device sends, to the font library aging module of the wearable device, a notification indicating deletion of the corresponding synchronization record is completed.

Step S304: The font library aging module of the wearable device notifies the font library of the wearable device to delete the corresponding font library data.

The font library upgrade procedure may include the following steps.

Step S401: The font library upgrade module of the wearable device sends, to the font library update module of the wearable device, font library data information that needs to be added.

The font library data information that needs to be added may include a language, an encoding range, a font, and a font size, and the part of font library data information may be determined based on a system upgrade requirement.

Step S402: The font library update module of the wearable device sends upgrade information to the font library update module of the terminal device.

The upgrade information may include font library data information of font library data that needs to be added for font library upgrading of the wearable device. The font library update module of the wearable device sends the upgrade information to the font library update module of the terminal device, to trigger the font library update process.

Step S403: The font library update module of the terminal device generates corresponding font library data and sends the corresponding font library data to the font library update module of the wearable device.

Font library data information of the corresponding font library data may be formed based on the upgrade information and the initial information of the wearable device. For example, when the upgrade information includes adding a language or an encoding range, the font library data information of the corresponding font library data may be formed based on the language or the encoding range and the font and the font size that are included by the wearable device in the initial information. The generated font library data may be dot matrix font library data or another type of font library data.

Step S404: The font library update module of the wearable device adds the received font library data to a font library of the wearable device.

Step S405: The font library update module of the wearable device sends a synchronization completion notification to the font library update module of the terminal device.

Step S406: The font library update module of the terminal device notifies the synchronization recording module to update the font library synchronization record corresponding to the wearable device.

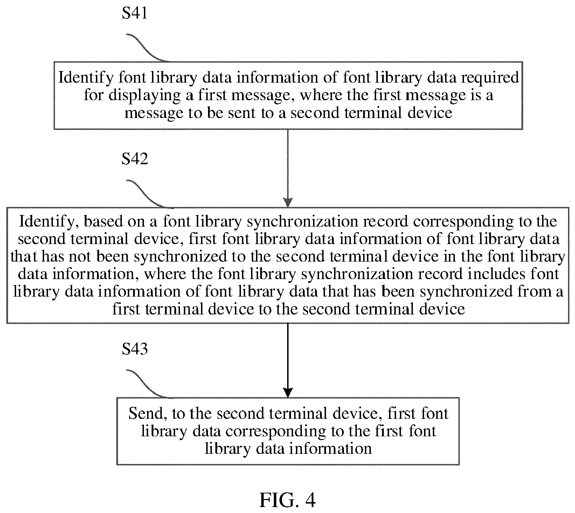

FIG. 4 is a flowchart of a font library synchronization method according to an embodiment of this application. The method may be applied to a first terminal device. As shown in FIG. 4, the method may include the following steps.

S41: Identify font library data information of font library data required for displaying a first message, where the first message is a message to be sent to a second terminal device.

S42: Identify, based on a font library synchronization record corresponding to the second terminal device, first font library data information of font library data that has not been synchronized to the second terminal device in the font library data information, where the font library synchronization record includes font library data information of font library data that has been synchronized from the first terminal device to the second terminal device.

S43: Send, to the second terminal device, first font library data corresponding to the first font library data information.

According to this embodiment of this application, when identifying, based on the font library synchronization record corresponding to the second terminal device, that all or a part of the font library data required for displaying the to-be-sent message is not synchronized to a font library on the second terminal device, the first terminal device sends the required font library data to the second terminal device. In this way, the first terminal device can send the required font library data to the second terminal device based on the font library synchronization record when the second terminal device displays the to-be-sent message. This prevents the second terminal device from carrying a full font library before delivery, to save font library storage space on the second terminal device, thereby reducing related hardware costs, and improving overall product resource planning and competitiveness.

The font library data may include dot matrix font library data or another type of font library data. For example, the dot matrix font library data may include two-dimensional pixel information of a plurality of literal characters corresponding to a language (or a character encoding range), a font, and a font size. The font library data information may indicate attribute information of font library data, and may include one or more of a language, a character encoding range, a font, and a font size. The font library synchronization record may include one or more pieces of font library data information, and each piece of font library data information indicates that font library data corresponding to the font library data information has been synchronized to the second terminal device. The font library data information in the font library synchronization record may be indexed in different manners, and the indexing manner may be determined based on a manner of organizing and maintaining a font library in the second terminal device. For example, related font library data information may be indexed based on a language, or related font library information may be indexed based on an encoding range (for example, a Unicode encoding range), to further refine an index granularity. For example, when related font library data information is indexed based on a language, font library data information that includes English may be indexed through "English".

The first message may be any message sent by the first terminal device to the second terminal device, for example, may be a system notification or an instant messaging message. This is not limited in this application. Font library data information of each character in the first message may be identified by identifying a language, a character encoding range, a font, a font size, or the like of each character included in the first message. For example, if the first message includes characters of a plurality of languages or a plurality of fonts, there may be a plurality of types of font library data information corresponding to the first message. It may be determined whether the font library synchronization record corresponding to the second terminal device includes the font library data information corresponding to each character in the first message. If the font library synchronization record does not include a part (the first font library data information) of the font library data information, it is considered that the part of font library data information has not been synchronized to the second terminal device. The first font library data corresponding to the first font library data information may be sent to the second terminal device for synchronization, so that the second terminal device can completely display the first message.

In a possible implementation, the second terminal device may display a fixed default font and a fixed default font size. The default font and the default font size may be determined based on initial font library information of the second terminal device, or may be specified by a user by using the first terminal device or the second terminal device. This is not limited in this application. The first font library data information may be a language. To be specific, the first terminal device may identify a language corresponding to each character in the first message. When some languages in the first message do not exist in the font library synchronization record, the corresponding first font library data (for example, dot matrix font library data corresponding to the identified language and the default font and font size) may be generated based on the language and the default font and font size of the second terminal device, and sent to the second terminal device.

For example, a mobile phone (an example of the first terminal device) needs to send a system notification message "Blue warning for rainstorms in Beijing from 2:00 to 8:00 pm today" to a smartwatch (an example of the second terminal device). The mobile phone identifies that font library data information (a language is English) corresponding to the English letters "pm" included in the message is not recorded in a font library synchronization record corresponding to the watch, generates dot matrix font library data whose language is English and font and font size are a default font and font size of the smartwatch, and sends the dot matrix font library data to the smartwatch. The smartwatch stores the dot matrix font library data in a font library, so that the smartwatch can display the message.

In a possible implementation, the font library synchronization method according to this embodiment of this application may further include: receiving a synchronization completion notification sent by the second terminal device, where the synchronization completion notification indicates that the first font library data has been synchronized to the second terminal device; and in response to the received synchronization completion notification, updating the font library synchronization record corresponding to the second terminal device, so that an updated font library synchronization record includes the first font library data information.

Based on this, the synchronization completion notification sent by the second terminal device is received, and the font library synchronization record corresponding to the second terminal device is updated in response to the received synchronization completion notification. In this way, the first terminal device can determine font library data information corresponding to font library data included in a current font library of the second terminal device, and the first terminal device can implement personalized management on different second terminal devices by managing synchronization records.

After the synchronization completion notification is received, the font library data information that corresponds to the font library data and that is updated by the second terminal device may be inserted into the current font library synchronization record based on an index manner in the font library synchronization record. For example, if the font library synchronization record is indexed based on a language, the updated font library data information may be inserted into a head or tail of the font library synchronization record, inserted between any two pieces of font library data information in the middle, or inserted into the font library synchronization record according to a predetermined language sequence (for example, in alphabetical order of initial letters of a language). If the font library synchronization record is indexed based on a character code, the updated font library data information may be inserted at a proper position in the font library synchronization record, font library data information in the font library synchronization record may be kept arranged in a character encoding sequence. This is not limited in this application. Correspondingly, the font library data in the second terminal device may also be stored and indexed in a similar manner.

For example, font library data information corresponding to dot matrix font library data that needs to be sent by a mobile phone (the first terminal device) to a smartwatch (the second terminal device) is English and a default font and font size of the smartwatch. When an organization and maintenance relationship of a font library of the smartwatch is maintained based on a character code, a corresponding character code range may be obtained based on English, a proper position of a head of the character code range in the font library synchronization record is obtained through searching, and the corresponding font library data information is inserted into the font library synchronization record.

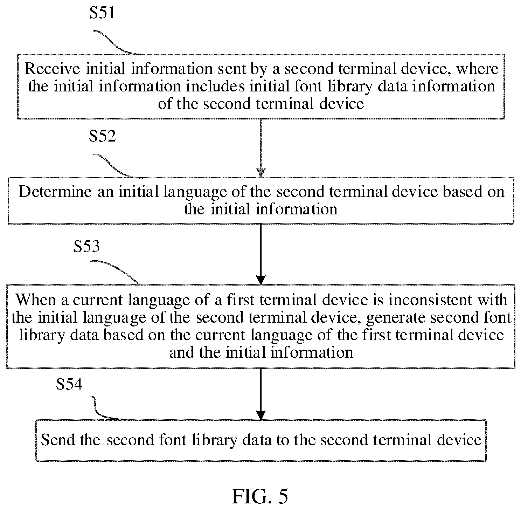

FIG. 5 is a flowchart of a font library synchronization method according to an embodiment of this application. The method may be applied to a first terminal device. As shown in FIG. 5, the method may further include the following steps.

S51: Receive initial information sent by a second terminal device, where the initial information includes initial font library data information of the second terminal device.

S52: Determine an initial language of the second terminal device based on the initial information.

S53: When a current language of the first terminal device is inconsistent with the initial language of the second terminal device, generate second font library data based on the current language of the first terminal device and the initial information.

S54: Send the second font library data to the second terminal device.

According to this embodiment of this application, the initial information sent by the second terminal device is received, the initial language of the second terminal device is determined based on the initial information, and the second font library data generated based on the current language and the initial information is sent to the second terminal device when the current language of the first terminal device is inconsistent with the initial language of the second terminal device. In this way, the second terminal device does not need to carry a full font library and only needs to carry a small amount of font library data before delivery, to complete font library initialization with the help of the first terminal device. This reduces an installation package and improves production efficiency. In addition, languages of the first terminal device and the second terminal device are unified, so that the second terminal device can display a message subsequently transmitted by the first terminal device.

The initial information may include the initial font library data information sent by the second terminal device to the first terminal device, and may further include other configuration information of the second terminal device. Font library data information corresponding to font library data currently included in a font library of the second terminal device may be determined based on the initial font library data information, and default font library data information (for example, a default font and a default font size) of the second terminal device in the font library data information may be further determined. There may be a plurality of organization and maintenance relationships of the font library of the second terminal device. For example, when the organization and maintenance relationship of the second terminal device is maintained by character code, the first terminal device may determine, from the initial information sent by the second terminal device, a character code corresponding to font library data in an initial font library of the second terminal device, determine the initial language of the second terminal device based on the character code, and compare the initial language with the current language of the first terminal device. It should be noted that there may be one or more initial languages of the second terminal device. This is not limited in this application.

For example, if a mobile phone (the first terminal device) identifies that an initial language of a paired smartwatch (the second terminal device) includes English and Chinese, and a current language of the mobile phone is French, the mobile phone may generate dot matrix font library data whose language is French and whose font and font size are a default font and font size of the smartwatch, and send the dot matrix font library data to the smartwatch. The smartwatch stores the dot matrix font library data in a font library. In a possible implementation, a language displayed on the smartwatch may be changed to the current language of the mobile phone.

When the current language of the first terminal device is consistent with the initial language of the second terminal device, the first terminal device may include the initial font library data information in a font library synchronization record corresponding to the second terminal device, to indicate that the second terminal device currently stores the font library data corresponding to the initial font library data information, and the first terminal device may not perform a font library synchronization operation on the second terminal device.

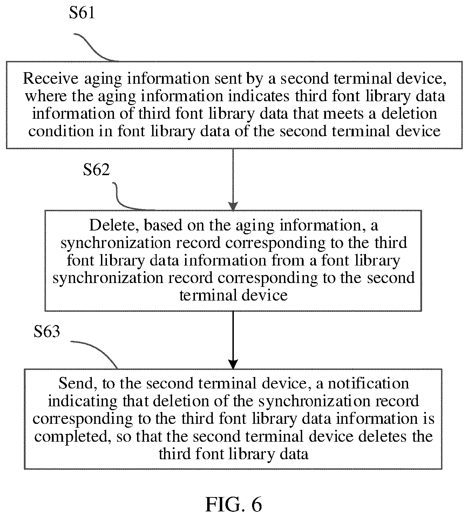

FIG. 6 is a flowchart of a font library synchronization method according to an embodiment of this application. The method may be applied to a first terminal device. As shown in FIG. 6, the method may further include the following steps.

S61: Receive aging information sent by a second terminal device, where the aging information indicates third font library data information of third font library data that meets a deletion condition in font library data of the second terminal device.

S62: Delete, based on the aging information, a synchronization record corresponding to the third font library data information from a font library synchronization record corresponding to the second terminal device.

S63: Send, to the second terminal device, a notification indicating that deletion of the synchronization record corresponding to the third font library data information is completed, so that the second terminal device deletes the third font library data.

According to this embodiment of this application, the first terminal device receives the aging information sent by the second terminal device, deletes, based on the aging information, a corresponding font library synchronization record from the font library synchronization record corresponding to the second terminal device, and sends a deletion completion notification to the second terminal device. In this way, self-maintenance of the second terminal device can be implemented with the help of the first terminal device, to reduce maintenance costs. Storage space corresponding to the second terminal device can be further released by deleting the corresponding font library synchronization record, to control the storage space of the second terminal device.

The aging information may include font library data information corresponding to font library data that meets the deletion condition in a font library of the second terminal device, and may be determined by the second terminal device. The first terminal device may determine, from the aging information, font library data information corresponding to font library data that needs to be deleted, determine, in the first terminal device in an indexing manner, a position of the font library data information that needs to be deleted in a font library synchronization record, and delete this part of font library data information.

For example, aging information sent by a smartwatch (the second terminal device) to a mobile phone (the first terminal device) includes dot matrix font library data that needs to be deleted and whose language is Chinese, font is Song typeface, and font size is 9. When an index relationship of a font library synchronization record is indexing by language, a head of font library data information whose language is Chinese may be searched for by index, and font library data information corresponding to the language being Chinese, the font being Song typeface, and the font size being 9 is deleted. After deletion is completed, the smartwatch is notified that the deletion is completed in the font library synchronization record, and the smartwatch may delete the corresponding font library data based on the notification.

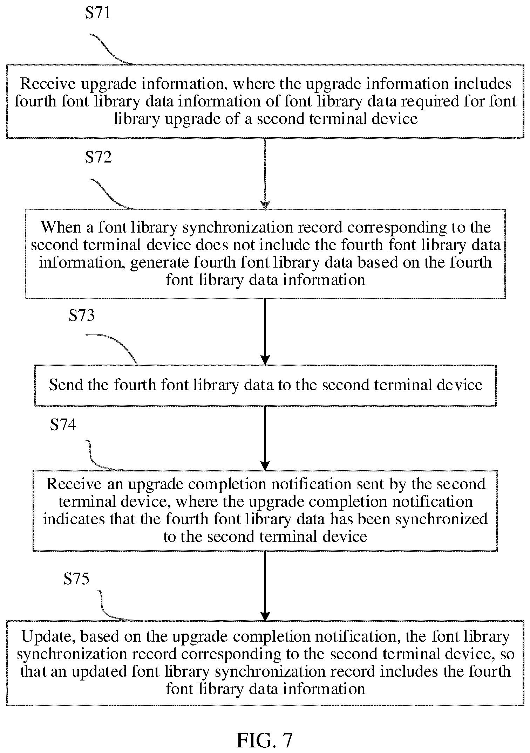

FIG. 7 is a flowchart of a font library synchronization method according to an embodiment of this application. The method may be applied to a first terminal device. As shown in FIG. 7, the method may further include the following steps.

S71: Receive upgrade information, where the upgrade information includes fourth font library data information of font library data required for font library upgrade of a second terminal device.

S72: When a font library synchronization record corresponding to the second terminal device does not include the fourth font library data information, generate fourth font library data based on the fourth font library data information.

S73: Send the fourth font library data to the second terminal device.

S74: Receive an upgrade completion notification sent by the second terminal device, where the upgrade completion notification indicates that the fourth font library data has been synchronized to the second terminal device.

S75: Update, based on the upgrade completion notification, the font library synchronization record corresponding to the second terminal device, so that an updated font library synchronization record includes the fourth font library data information.

According to this embodiment of this application, the first terminal device receives the upgrade information, generates the fourth font library data based on the fourth font library data information when the font library synchronization record corresponding to the second terminal device does not include the fourth font library data information in the upgrade information, sends the fourth font library data to the second terminal device, receives the upgrade completion notification sent by the second terminal device, and updates, based on the upgrade completion notification, the font library synchronization record corresponding to the second terminal device. In this way, the second terminal device can complete font library upgrade processing with the help of the first terminal device, and a font library upgrade installation package does not need to be carried during system upgrade of the second terminal device. This reduces a size of the installation package of the second terminal device during the system upgrade, and reduces maintenance costs.

The upgrade information may include a language that needs to be added to the second terminal device. A language to be added may be determined based on a product requirement of the second terminal device. After receiving the upgrade information, the first terminal device may determine, based on the font library synchronization record corresponding to the second terminal device, whether a font library of the second terminal device includes font library data corresponding to the language that needs to be added. If the font library of the second terminal device already includes the corresponding font library data, no subsequent operation is required. If the font library of the second terminal device does not include the corresponding font library data, a font library update procedure may be triggered, to continue a subsequent operation. The upgrade information may further include any combination of a language (or a character encoding range), a font, and a font size. This is not limited in this application.

For example, upgrade information sent by a smartwatch (the second terminal device) to a mobile phone (the first terminal device) includes font library data corresponding to Chinese that needs to be added. The mobile phone may automatically generate, by using a local vector font library, dot matrix font library data corresponding to a language of Chinese, a font of a default font (for example, Song typeface) of the smartwatch, and a font size of a default font (for example, 9) of the smartwatch, and send the dot matrix font library data to the smartwatch by using a package. After receiving an upgrade completion notification sent by the smartwatch, the mobile phone may add font library data information including the language being Chinese, the font being the default font (for example, Song typeface) of the smartwatch, and the font size being the default font size (for example, 9) of the smartwatch to a font library synchronization record. After the addition, the smartwatch is notified that update is completed in the synchronization record.

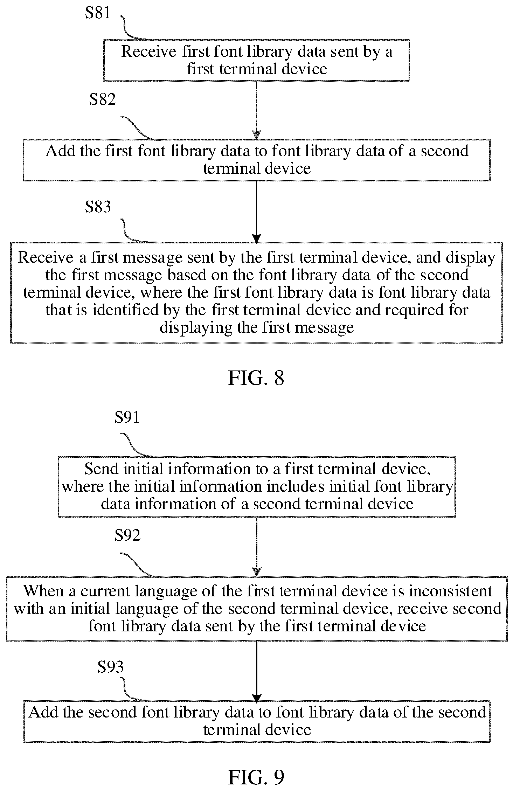

FIG. 8 is a flowchart of a font library synchronization method according to an embodiment of this application. The method may be applied to a second terminal device. As shown in FIG. 8, the method may include the following steps.

S81: Receive first font library data sent by a first terminal device.

S82: Add the first font library data to font library data of the second terminal device.

S83: Receive a first message sent by the first terminal device, and display the first message based on the font library data of the second terminal device, where the first font library data is font library data that is identified by the first terminal device and required for displaying the first message.

According to this embodiment of this application, the first font library data sent by the first terminal device is received, the first font library data is added to the font library data of the second terminal device, the first message sent by the first terminal device is received, and the first message is displayed based on the font library data of the second terminal device. Therefore, before the second terminal device displays a message, font library data required for displaying the message may be transmitted to the second terminal device. This avoids a case in which the second terminal device cannot display or abnormally displays the message. In addition, the foregoing process does not require user intervention, and may be automatically completed by the first terminal device and the second terminal device. Self-maintenance is performed on a font library of the second terminal device without impact on a user, so that user experience can be improved. In addition, the second terminal device does not need to carry a full font library and only needs to carry a small amount of font library data before delivery. This reduces an installation package and improves production efficiency.

For example, after a smartwatch (the second terminal device) stores, in a font library, dot matrix font library data (the first font library data) sent by a mobile phone (the first terminal device), the smartwatch may receive a system notification message sent by the mobile phone to the smartwatch, for example, "Blue warning for rainstorms in Beijing from 2:00 to 8:00 pm today". Even if the smartwatch cannot display English "pm", after the smartwatch stores the corresponding dot matrix font library data in the font library, the smartwatch may invoke related font library data, so that the message can be displayed normally.

In a possible implementation, the font library synchronization method according to this embodiment of this application may further include: sending a synchronization completion notification to the first terminal device, so that the first terminal device updates a font library synchronization record corresponding to the second terminal device, where the synchronization completion notification indicates that the first font library data has been synchronized to the second terminal device, and the font library synchronization record includes font library data information of font library data that has been synchronized from the first terminal device to the second terminal device.

Based on this, the synchronization completion notification is sent to the first terminal device. In this way, the first terminal device can determine font library data information corresponding to font library data included in a current font library of the second terminal device, and the first terminal device can implement personalized management on different second terminal devices by managing synchronization records.

FIG. 9 is a flowchart of a font library synchronization method according to an embodiment of this application. The method may be applied to a second terminal device. As shown in FIG. 9, the method may further include the following steps.

S91. Send initial information to a first terminal device, where the initial information includes initial font library data information of the second terminal device.

S92: When a current language of the first terminal device is inconsistent with an initial language of the second terminal device, receive second font library data sent by the first terminal device.

S93: Add the second font library data to font library data of the second terminal device.

According to this embodiment of this application, the initial information is sent to the first terminal device, the second font library data sent by the first terminal device is received when the current language of the first terminal device is inconsistent with the initial language of the second terminal device, and the second font library data is added to the font library data of the second terminal device. Therefore, font library initialization of the second terminal device is completed with the help of the first terminal device. In this way, the second terminal device does not need to carry a full font library and only needs to carry a small amount of font library data before delivery. This reduces storage space occupied by the font library of the second terminal device, and reduces related hardware costs. In addition, languages of the first terminal device and the second terminal device are unified, so that the second terminal device can display a message subsequently transmitted by the first terminal device.

For example, when an organization and maintenance manner of a font library on a smartwatch (the second terminal device) is maintenance by Unicode character code, initial font library data information in initial information sent to a mobile phone (the first terminal device) may include a Unicode character encoding range of 4E00 to 9FA5 (an encoding range of basic Chinese characters), a font of Song typeface, and a font size of 9. In a possible implementation, the initial information may further include information with a default font of Song typeface and a default font size of 9 in font library data. In a possible implementation, the initial information may further include an organization and maintenance manner of the font library on the smartwatch, to keep an indexing manner of a synchronization record of the mobile phone consistent with the organization and maintenance manner of the font library on the smartwatch.

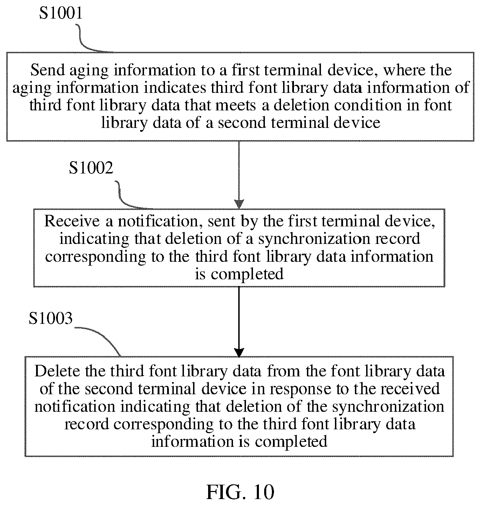

FIG. 10 is a flowchart of a font library synchronization method according to an embodiment of this application. The method may be applied to a second terminal device. As shown in FIG. 10, the method may further include the following steps.

S1001: Send aging information to a first terminal device, where the aging information indicates third font library data information of third font library data that meets a deletion condition in font library data of the second terminal device.

S1002: Receive a notification, sent by the first terminal device, indicating that deletion of a synchronization record corresponding to the third font library data information is completed.

S1003: Delete the third font library data from the font library data of the second terminal device in response to the received notification indicating that deletion of the synchronization record corresponding to the third font library data information is completed.

According to this embodiment of this application, the aging information is sent to the first terminal device, the notification, sent by the first terminal device and indicating that the synchronization record corresponding to the third font library data information is deleted is received, and the third font library data is deleted from the font library data of the second terminal device. In this way, when an amount of font library data required for displaying by the second terminal device is increasing, storage space occupied by a font library of the second terminal device can be controlled, so that the storage space occupied by the font library is kept at a proper size, to improve overall product resource planning and competitiveness.

**In** a possible implementation, according to the font library synchronization method in this embodiment of this application, the third font library data that meets the deletion condition may include: third font library data whose usage is less than a first threshold within a predetermined time period in the font library data; and/or third font library data whose usage is less than a third threshold in the font library data when a storage amount of the font library data is greater than a second threshold, where the third threshold is determined based on the second threshold, so that the storage amount of the font library data is not greater than the second threshold after the third font library data is deleted.

Based on this, the foregoing two implementations and another possible implementation may be used, so that the font library of the second terminal device may be continuously updated based on a use habit of the user or an actual display requirement, or the storage space occupied by the font library of the second terminal device is further controlled not to exceed an upper limit, so that the font library of the second terminal device can be continuously self-maintained, thereby saving the storage space.

For example, a smartwatch (the second terminal device) may record a quantity of use times of each piece of font library data each time when the font library data is displayed and invoked, and collect statistics on a usage rate of each piece of font library data every week (or in a predetermined time period of another length), where the usage rate may be determined by a ratio of the quantity of use times to the predetermined time period. It is assumed that the first threshold is 1 time/week (or any other value as required), one or more pieces of font library data whose usage rate is 0 in a week may be used as font library data that meets a deletion condition, and corresponding aging information is generated based on a language (or an encoding range), a font, and a font size corresponding to the one or more pieces of font library data.

For another example, it is assumed that the second threshold is 80% (or any other value as required) of a preset total storage capacity of the smartwatch. When a font library storage capacity is greater than 80% of the preset total storage capacity, the smartwatch may further use, based on weekly statistics on a usage rate of each language, font library data corresponding to a language with a low usage rate as font library data that meets a deletion condition, so that after this part of font library data is deleted, the font library storage capacity may not exceed 80% of the preset total storage capacity.

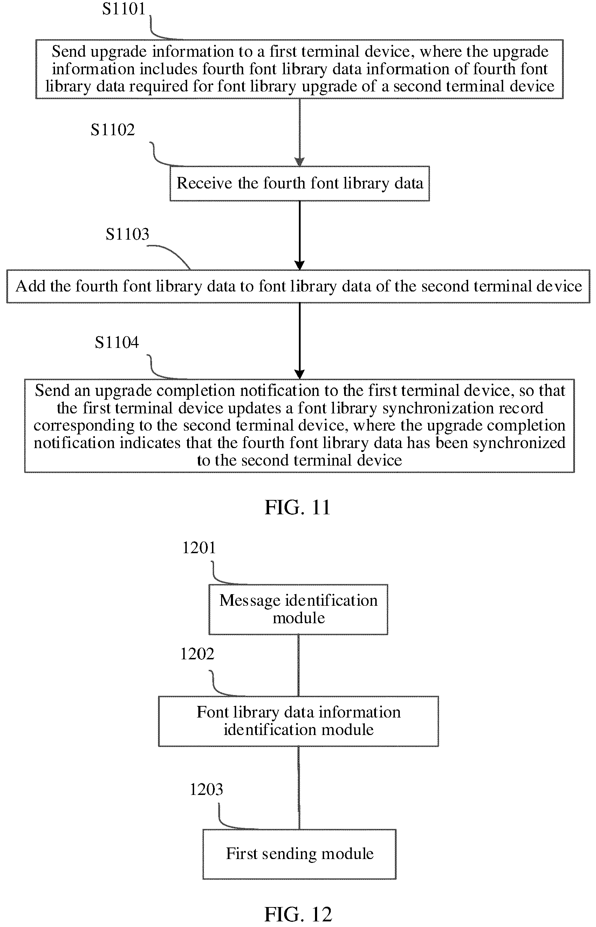

FIG. 11 is a flowchart of a font library synchronization method according to an embodiment of this application. The method may be applied to a second terminal device. As shown in FIG. 11, the method may further include the following steps.

S1101: Send upgrade information to a first terminal device, where the upgrade information includes fourth font library data information of fourth font library data required for font library upgrade of the second terminal device.

S1102: Receive the fourth font library data.

S1103: Add the fourth font library data to font library data of the second terminal device.

S1104. Send an upgrade completion notification to the first terminal device, so that the first terminal device updates a font library synchronization record corresponding to the second terminal device, where the upgrade completion notification indicates that the fourth font library data has been synchronized to the second terminal device.

According to this embodiment of this application, the upgrade information is sent to the first terminal device, the fourth font library data is received, the fourth font library data is added to the font library data of the second terminal device, and the upgrade completion notification is sent to the first terminal device. In this way, the second terminal device does not need to carry a font library upgrade installation package during system upgrade, and a font library upgrade process can be automatically completed based on a current font library of the second terminal device, thereby reducing a storage amount of a server, download time consumption, and a download amount of a user, reducing maintenance costs, and improving user experience.

In a possible implementation, the second terminal device may receive system upgrade information by using a network, where the system upgrade information may include information about font library upgrade. For example, after receiving system upgrade information, a smartwatch (the second terminal device) may send, to a mobile phone (the first terminal device), upgrade information of font library upgrade related to the system upgrade information, for example, including Chinese font library data that needs to be added. After receiving the Chinese dot matrix font library data sent by the mobile phone, the smartwatch may determine an appropriate insertion position (for example, a position sorted by initial letter of a language) in a font library based on an organization and maintenance relationship of the font library, and add the dot matrix font library data to the font library. If the related font library data already exists in the font library, the smartwatch may report an error to the mobile phone. If normal addition is completed, the smartwatch may send an update completion notification to the mobile phone.

FIG. 12 is a schematic diagram of a structure of a font library synchronization apparatus according to an embodiment of this application. The apparatus may be used in a first terminal device. As shown in FIG. 12, the apparatus may include:
a message identification module 1201, configured to identify font library data information of font library data required for displaying a first message, where the first message is a message to be sent to a second terminal device;
a font library data information identification module 1202, configured to identify, based on a font library synchronization record corresponding to the second terminal device, first font library data information of font library data that has not been synchronized to the second terminal device in the font library data information, where the font library synchronization record includes font library data information of font library data that has been synchronized from the first terminal device to the second terminal device; and
a first sending module 1203, configured to send, to the second terminal device, first font library data corresponding to the first font library data information.

According to this embodiment of this application, when identifying, based on the font library synchronization record corresponding to the second terminal device, that all or a part of the font library data required for displaying the to-be-sent message is not synchronized to a font library on the second terminal device, the first terminal device sends the required font library data to the second terminal device. In this way, the first terminal device can send the required font library data to the second terminal device based on the font library synchronization record when the second terminal device displays the to-be-sent message. This prevents the second terminal device from carrying a full font library before delivery, to save font library storage space on the second terminal device, thereby reducing related hardware costs, and improving overall product resource planning and competitiveness.

In a possible implementation of the font library synchronization apparatus, the apparatus further includes: a first receiving module, configured to receive a synchronization completion notification sent by the second terminal device, where the synchronization completion notification indicates that the first font library data has been synchronized to the second terminal device; and a first record update module, configured to: in response to the received synchronization completion notification, update the font library synchronization record corresponding to the second terminal device, so that an updated font library synchronization record includes the first font library data information.

According to this embodiment of this application, the synchronization completion notification sent by the second terminal device is received, and the font library synchronization record corresponding to the second terminal device is updated in response to the received synchronization completion notification. In this way, the first terminal device can determine font library data information corresponding to font library data included in a current font library of the second terminal device, and the first terminal device can implement personalized management on different second terminal devices by managing synchronization records.

In a possible implementation of the font library synchronization apparatus, the apparatus further includes: a second receiving module, configured to receive initial information sent by the second terminal device, where the initial information includes initial font library data information of the second terminal device; an initial language determining module, configured to determine an initial language of the second terminal device based on the initial information; a first font library data generation module, configured to: when a current language of the first terminal device is inconsistent with the initial language of the second terminal device, generate second font library data based on the current language of the first terminal device and the initial information; and a second sending module, configured to send the second font library data to the second terminal device.

According to this embodiment of this application, the initial information sent by the second terminal device is received, the initial language of the second terminal device is determined based on the initial information, and the second font library data generated based on the current language and the initial information is sent to the second terminal device when the current language of the first terminal device is inconsistent with the initial language of the second terminal device. In this way, the second terminal device does not need to carry a full font library and only needs to carry a small amount of font library data before delivery, to complete font library initialization with the help of the first terminal device. This reduces an installation package and improves production efficiency. In addition, languages of the first terminal device and the second terminal device are unified, so that the second terminal device can display a message subsequently transmitted by the first terminal device.

In a possible implementation of the font library synchronization apparatus, the apparatus further includes: a third receiving module, configured to receive aging information sent by the second terminal device, where the aging information indicates third font library data information of third font library data that meets a deletion condition in font library data of the second terminal device; a record deletion module, configured to delete, based on the aging information, a synchronization record corresponding to the third font library data information from the font library synchronization record corresponding to the second terminal device; and a third sending module, configured to send, to the second terminal device, a notification indicating that deletion of the synchronization record corresponding to the third font library data information is completed, so that the second terminal device deletes the third font library data.

According to this embodiment of this application, the first terminal device receives the aging information sent by the second terminal device, deletes, based on the aging information, a corresponding font library synchronization record from the font library synchronization record corresponding to the second terminal device, and sends a deletion completion notification to the second terminal device. In this way, self-maintenance of the second terminal device can be implemented with the help of the first terminal device, to reduce maintenance costs. Storage space corresponding to the second terminal device can be further released by deleting the corresponding font library synchronization record, to control the storage space of the second terminal device.

In a possible implementation of the font library synchronization apparatus, the apparatus further includes: a fourth receiving module, configured to receive upgrade information, where the upgrade information includes fourth font library data information of font library data required for font library upgrade of the second terminal device; a second font library data generation module, configured to: when the font library synchronization record corresponding to the second terminal device does not include the fourth font library data information, generate fourth font library data based on the fourth font library data information; a fourth sending module, configured to send the fourth font library data to the second terminal device; a fifth receiving module, configured to receive an upgrade completion notification sent by the second terminal device, where the upgrade completion notification indicates that the fourth font library data has been synchronized to the second terminal device; and a second record update module, configured to update, based on the upgrade completion notification, the font library synchronization record corresponding to the second terminal device, so that an updated font library synchronization record includes the fourth font library data information.

According to this embodiment of this application, the first terminal device receives the upgrade information, generates the fourth font library data based on the fourth font library data information when the font library synchronization record corresponding to the second terminal device does not include the fourth font library data information in the upgrade information, sends the fourth font library data to the second terminal device, receives the upgrade completion notification sent by the second terminal device, and updates, based on the upgrade completion notification, the font library synchronization record corresponding to the second terminal device. In this way, the second terminal device can complete font library upgrade processing with the help of the first terminal device, and a font library upgrade installation package does not need to be carried during system upgrade of the second terminal device. This reduces a size of the installation package of the second terminal device during the system upgrade, and reduces maintenance costs.

In a possible implementation of the font library synchronization apparatus, the font library data information includes one or more of a language, a character encoding range, a font, and a font size.

According to this embodiment of this application, the font library data information may include one or more of the language, the character encoding range, the font, and the font size, so that the font library may be managed at different granularities based on an actual situation. This is more flexible.

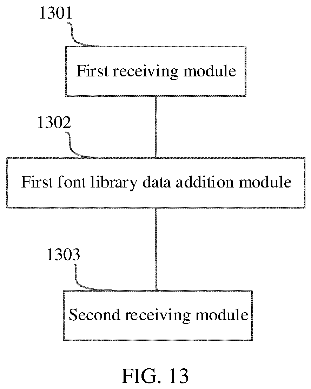

FIG. 13 is a schematic diagram of a structure of a font library synchronization apparatus according to an embodiment of this application. The apparatus may be used in a second terminal device. As shown in FIG. 13, the apparatus may include:
a first receiving module 1301, configured to receive first font library data sent by a first terminal device;
a first font library data addition module 1302, configured to add the first font library data to font library data of the second terminal device; and
a second receiving module 1303, configured to receive a first message sent by the first terminal device, and display the first message based on the font library data of the second terminal device, where the first font library data is font library data that is identified by the first terminal device and required for displaying the first message.

According to this embodiment of this application, the first font library data sent by the first terminal device is received, the first font library data is added to the font library data of the second terminal device, the first message sent by the first terminal device is received, and the first message is displayed based on the font library data of the second terminal device. Therefore, before the second terminal device displays a message, font library data required for displaying the message may be transmitted to the second terminal device. This avoids a case in which the second terminal device cannot display or abnormally displays the message. In addition, the foregoing process does not require user intervention, and may be automatically completed by the first terminal device and the second terminal device. Self-maintenance is performed on a font library of the second terminal device without impact on a user, so that user experience can be improved. In addition, the second terminal device does not need to carry a full font library and only needs to carry a small amount of font library data before delivery. This reduces an installation package and improves production efficiency.

In a possible implementation of the font library synchronization apparatus, the apparatus further includes: a first sending module, configured to send a synchronization completion notification to the first terminal device, so that the first terminal device updates a font library synchronization record corresponding to the second terminal device, where the synchronization completion notification indicates that the first font library data has been synchronized to the second terminal device, and the font library synchronization record includes font library data information of font library data that has been synchronized from the first terminal device to the second terminal device.

According to this embodiment of this application, the synchronization completion notification is sent to the first terminal device. In this way, the first terminal device can determine font library data information corresponding to font library data included in a current font library of the second terminal device, and the first terminal device can implement personalized management on different second terminal devices by managing synchronization records.

In a possible implementation of the font library synchronization apparatus, the apparatus further includes: a second sending module, configured to send initial information to the first terminal device, where the initial information includes initial font library data information of the second terminal device; a third receiving module, configured to: when a current language of the first terminal device is inconsistent with an initial language of the second terminal device, receive second font library data sent by the first terminal device; and a second font library data addition module, configured to add the second font library data to the font library data of the second terminal device.

According to this embodiment of this application, the initial information is sent to the first terminal device, the second font library data sent by the first terminal device is received when the current language of the first terminal device is inconsistent with the initial language of the second terminal device, and the second font library data is added to the font library data of the second terminal device. Therefore, font library initialization of the second terminal device is completed with the help of the first terminal device. In this way, the second terminal device does not need to carry a full font library and only needs to carry a small amount of font library data before delivery. This reduces storage space occupied by the font library of the second terminal device, and reduces related hardware costs. In addition, languages of the first terminal device and the second terminal device are unified, so that the second terminal device can display a message subsequently transmitted by the first terminal device.

In a possible implementation of the font library synchronization apparatus, the apparatus further includes: a third sending module, configured to send aging information to the first terminal device, where the aging information indicates third font library data information of third font library data that meets a deletion condition in the font library data of the second terminal device; a fourth receiving module, configured to receive a notification, sent by the first terminal device, indicating that deletion of a synchronization record corresponding to the third font library data information is completed; and a font library data deletion module, configured to delete the third font library data from the font library data of the second terminal device in response to the received notification indicating that deletion of the synchronization record corresponding to the third font library data information is completed.

According to this embodiment of this application, the aging information is sent to the first terminal device, the notification, sent by the first terminal device and indicating that the synchronization record corresponding to the third font library data information is deleted is received, and the third font library data is deleted from the font library data of the second terminal device. In this way, when an amount of font library data required for displaying by the second terminal device is increasing, storage space occupied by a font library of the second terminal device can be controlled, so that the storage space occupied by the font library is kept at a proper size, to improve overall product resource planning and competitiveness.

In a possible implementation of the font library synchronization apparatus, the third font library data that meets the deletion condition includes: third font library data whose usage is less than a first threshold within a predetermined time period in the font library data; and/or third font library data whose usage is less than a third threshold in the font library data when a storage amount of the font library data is greater than a second threshold, where the third threshold is determined based on the second threshold, so that the storage amount of the font library data is not greater than the second threshold after the third font library data is deleted.

According to this embodiment of this application, the foregoing two implementations and another possible implementation may be used, so that the font library of the second terminal device may be continuously updated based on a use habit of the user or an actual display requirement, or the storage space occupied by the font library of the second terminal device is further controlled not to exceed an upper limit, so that the font library of the second terminal device can be continuously self-maintained, thereby saving the storage space.

In a possible implementation of the font library synchronization apparatus, the apparatus further includes: a fourth sending module, configured to send upgrade information to the first terminal device, where the upgrade information includes fourth font library data information of fourth font library data required for font library upgrade of the second terminal device; a fifth receiving module, configured to receive the fourth font library data; a third font library data addition module, configured to add the fourth font library data to the font library data of the second terminal device; and a fifth sending module, configured to send an upgrade completion notification to the first terminal device, so that the first terminal device updates a font library synchronization record corresponding to the second terminal device, where the upgrade completion notification indicates that the fourth font library data has been synchronized to the second terminal device.

According to this embodiment of this application, the upgrade information is sent to the first terminal device, the fourth font library data is received, the fourth font library data is added to the font library data of the second terminal device, and the upgrade completion notification is sent to the first terminal device. In this way, the second terminal device does not need to carry a font library upgrade installation package during system upgrade, and a font library upgrade process can be automatically completed based on a current font library of the second terminal device, thereby reducing a storage amount of a server, download time consumption, and a download amount of a user, reducing maintenance costs, and improving user experience.

In a possible implementation of the font library synchronization apparatus, the font library data information includes one or more of a language, a character encoding range, a font, and a font size.

According to this embodiment of this application, the font library data information may include one or more of the language, the character encoding range, the font, and the font size, so that the font library may be managed at different granularities based on an actual situation. This is more flexible.

For example descriptions of the foregoing apparatus embodiments, refer to the method embodiments. Details are not repeated herein.

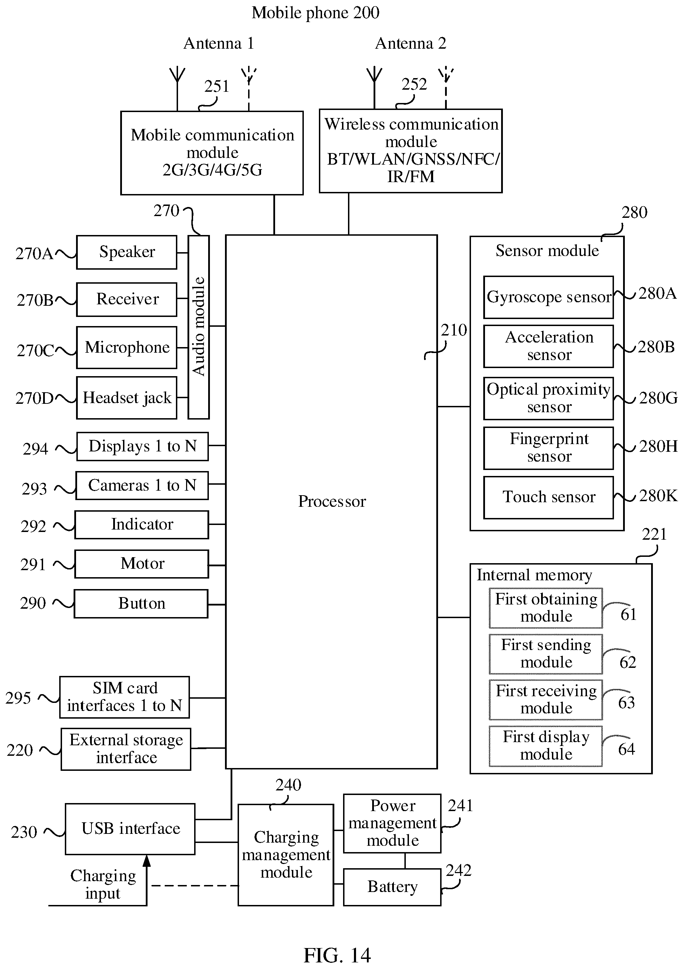

FIG. 14 is a schematic diagram of a structure of a terminal device according to another embodiment of this application. For example, the terminal device is a mobile phone. FIG. 14 is a schematic diagram of a structure of a mobile phone 200.

The mobile phone 200 may include a processor 210, an external storage interface 220, an internal storage 221, a USB interface 230, a charging management module 240, a power management module 241, a battery 242, an antenna **1,** an antenna 2, a mobile communication module 251, a wireless communication module 252, an audio module 270, a speaker 270A, a receiver 270B, a microphone 270C, a headset jack 270D, a sensor module 280, a button 290, a motor 291, an indicator 292, a camera 293, a display 294, a SIM card interface 295, and the like. The sensor module 280 may include a gyroscope sensor 280A, an acceleration sensor 280B, an optical proximity sensor 280G, a fingerprint sensor 280H, and a touch sensor 280K (certainly, the mobile phone 200 may further include other sensors such as a temperature sensor, a pressure sensor, a distance sensor, a magnetic sensor, an ambient light sensor, a barometric pressure sensor, and a bone conduction sensor, which are not shown in the figure).

It may be understood that an illustrated structure in this embodiment of this application does not constitute a specific limitation on the mobile phone 200. In some other embodiments of this application, the mobile phone 200 may include more or fewer components than those shown in the figure, combine some components, divide some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent components, or may be integrated into one or more processors. The controller may be a nerve center and a command center of the mobile phone 200. The controller may generate an operation control signal based on an instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data that has been used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency.

The processor 210 may run the font library synchronization method according to embodiments of this application, to send the required font library data to the second terminal device when identifying, based on the font library synchronization record corresponding to the second terminal device, that all or a part of the font library data required for displaying the to-be-sent message is not synchronized to a font library on the second terminal device. This prevents the second terminal device from carrying a full font library before delivery, to save font library storage space on the second terminal device, thereby reducing related hardware costs, and improving overall product resource planning and competitiveness. The processor 210 may include different components. For example, when a CPU and a GPU are integrated, the CPU and the GPU may cooperate to perform the font library synchronization method provided in embodiments of this application. For example, in the font library synchronization method, some algorithms are executed by the CPU, and other algorithms are executed by the GPU, to obtain high processing efficiency.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. **In** some embodiments, the mobile phone 200 may include one or N displays 294, where N is a positive integer greater than 1. The display 294 may be configured to display information input by a user or information provided to a user, and various graphical user interfaces (graphical user interface, GUI). For example, the display 294 may display a photo, a video, a web page, a file, or the like. For another example, the display 294 may display a graphical user interface. The graphical user interface includes a status bar, a navigation bar that can be hidden, a time and weather widget (widget), and an application icon, for example, a browser icon. The status bar includes an operator name (for example, China Mobile), a mobile network (for example, 4G), time, and a battery level. The navigation bar includes an icon of a back (back) button, an icon of a home (home) button, and an icon of a forward button. In addition, it may be understood that, in some embodiments, the status bar may further include a Bluetooth icon, a Wi-Fi icon, an icon of an externally-connected device, and the like. It may be further understood that, in some other embodiments, the graphical user interface may further include a dock bar, and the dock bar may include an icon of a frequently-used application and the like. After the processor 210 detects a touch event of a user on an application icon by using a finger (a stylus or the like), in response to the touch event, the processor 210 starts a user interface of an application corresponding to the application icon, and displays the user interface of the application on the display 294.

In this embodiment of this application, the display 294 may be one integrated flexible display, or may be a spliced display including two rigid screens and one flexible screen located between the two rigid screens.

After the processor 210 runs the font library synchronization method provided in embodiments of this application, a terminal device may establish a connection to another terminal device by using the antenna **1,** the antenna 2, or the USB interface, and transmit font library data according to the font library synchronization method provided in embodiments of this application, to implement font library synchronization.

The camera 293 (which may be a front-facing camera, a rear-facing camera, or a camera that may serve as both a front-facing camera and a rear-facing camera) is configured to capture a static image or a video. Usually, the camera 293 may include a photosensitive element such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal.

The internal memory 221 may be configured to store computer-executable program code, and the executable program code includes instructions. The processor 210 runs the instructions stored in the internal memory 221, to implement various function applications and data processing of the mobile phone 200. The internal memory 221 may include a program storage area and a data storage area. The program storage area may store code of an operating system, an application (for example, a camera application or a WeChat application), and the like. The data storage area may store data (for example, an image or a video collected by the camera application) and the like that are created during use of the mobile phone 200.

The internal memory 221 may further store one or more computer programs 1310 corresponding to the font library synchronization method provided in embodiments of this application. The one or more computer programs 1310 are stored in the memory 221 and configured to be executed by the one or more processors 210. The one or more computer programs 1310 include instructions. The instructions may be for performing steps in embodiments corresponding to FIG. 2 to FIG. 11. The computer programs 1310 may include: a message identification module 1201, configured to identify font library data information of font library data required for displaying a first message, where the first message is a message to be sent to a second terminal device; a font library data information identification module 1202, configured to identify, based on a font library synchronization record corresponding to the second terminal device, first font library data information of font library data that has not been synchronized to the second terminal device in the font library data information, where the font library synchronization record includes font library data information of font library data that has been synchronized from the first terminal device to the second terminal device; and a first sending module 1203, configured to send, to the second terminal device, first font library data corresponding to the first font library data information.

In addition, the internal memory 221 may include a high-speed random access memory, and may further include a non-volatile memory, for example, at least one magnetic disk storage device, a flash memory device, or a universal flash memory (universal flash storage, UFS).

Certainly, the code corresponding to the font library method synchronization provided in embodiments of this application may alternatively be stored in an external memory. In this case, the processor 210 may run, by using the external memory interface 220, the code of the font library synchronization method stored in the external memory.

The following describes functions of the sensor module 280.

The gyroscope sensor 280A may be configured to determine a motion posture of the mobile phone 200. In some embodiments, angular velocities of the mobile phone 200 around three axes (namely, axes x, y, and z) may be determined by using the gyroscope sensor 280A. In other words, the gyroscope sensor 280A may be configured to detect a current motion status of the mobile phone 200, for example, a shaking state or a static state.

When the display in this embodiment of this application is a foldable screen, the gyroscope sensor 280A may be configured to detect a folding or unfolding operation performed on the display 294. The gyroscope sensor 280A may report the detected folding or unfolding operation as an event to the processor 210, to determine whether the display 294 is in a folded state or an unfolded state.

The acceleration sensor 280B may detect magnitudes of accelerations in various directions (usually on three axes) of the mobile phone 200. In other words, the gyroscope sensor 280A may be configured to detect a current motion status of the mobile phone 200, for example, a shaking state or a static state. When the display in this embodiment of this application is a foldable screen, the acceleration sensor 280B may be configured to detect a folding or unfolding operation performed on the display 294. The acceleration sensor 280B may report the detected folding or unfolding operation as an event to the processor 210, to determine whether the display 294 is in a folded state or an unfolded state.

The optical proximity sensor 280G may include a light emitting diode (LED) and an optical detector, for example, a photodiode. The light emitting diode may be an infrared light emitting diode. The mobile phone emits infrared light by using the light emitting diode. The mobile phone detects infrared reflected light from a nearby object by using the photodiode. When sufficient reflected light is detected, the mobile phone may determine that there is an object near the mobile phone. When insufficient reflected light is detected, the mobile phone may determine that there is no object near the mobile phone. When the display in this embodiment of this application is a foldable screen, the optical proximity sensor 280G may be disposed on a first screen of the foldable display 294, and the optical proximity sensor 280G may detect a magnitude of an angle between the first screen and a second screen in a folded or unfolded state based on an optical path difference between infrared signals.

The gyroscope sensor 280A (or the acceleration sensor 280B) may send detected motion status information (for example, the angular velocity) to the processor 210. The processor 210 determines, based on the motion status information, whether the mobile phone is currently in a handheld state or a tripod state (for example, when the angular velocity is not 0, it indicates that the mobile phone 200 is in the handheld state).

The fingerprint sensor 280H is configured to collect a fingerprint. The mobile phone 200 may use a feature of the collected fingerprint to implement fingerprint-based unlocking, application lock access, fingerprint-based photographing, fingerprint-based call answering, and the like.

The touch sensor 280K is also referred to as a "touch panel". The touch sensor 280K may be disposed in the display 294, and the touch sensor 280K and the display 294 form a touchscreen, which is also referred to as a "touch control screen". The touch sensor 280K is configured to detect a touch operation performed on or near the touch sensor 280K. The touch sensor may transfer the detected touch operation to the application processor to determine a type of the touch event. Visual output related to the touch operation may be provided by using the display 294. **In** some other embodiments, the touch sensor 280K may alternatively be disposed on a surface of the mobile phone 200 at a position different from that of the display 294.

For example, the display 294 of the mobile phone 200 displays a home screen, and the home screen includes icons of a plurality of applications (for example, a camera application and a WeChat application). The user taps an icon of the camera application on the home screen via the touch sensor 280K, to trigger the processor 210 to start the camera application and turn on the camera 293. The display 294 displays an interface of the camera application, for example, a viewfinder interface.

A wireless communication function of the mobile phone 200 may be implemented by using the antenna 1, the antenna 2, the mobile communication module 251, the wireless communication module 252, the modem processor, the baseband processor, and the like.

The antenna 1 and the antenna 2 are configured to transmit and receive an electromagnetic wave signal. Each antenna in the mobile phone 200 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 251 may provide a solution that is applied to the mobile phone 200 and that includes wireless communication such as 2G, 3G, 4G, and 5G. The mobile communication module 251 may include at least one filter, a switch, a power amplifier, a low noise amplifier (low noise amplifier, LNA), and the like. The mobile communication module 251 may receive an electromagnetic wave through the antenna 1, perform processing such as filtering or amplification on the received electromagnetic wave, and transmit the electromagnetic wave to the modem processor for demodulation. The mobile communication module 251 may further amplify a signal modulated by the modem processor, and convert, by using the antenna 1, the signal into an electromagnetic wave for radiation. In some embodiments, at least some functional modules in the mobile communication module 251 may be disposed in the processor 210. In some embodiments, at least some function modules of the mobile communication module 251 may be disposed in a same device with at least some modules of the processor 210. In this embodiment of this application, the mobile communication module 251 may be further configured to perform information exchange with another terminal device, for example, send font library data, and receive and send a message notification.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 270A, the receiver 270B, or the like), or displays an image or a video by using the display 294. In some embodiments, the modem processor may be an independent component. In some other embodiments, the modem processor may be independent of the processor 210, and is disposed in a same device as the mobile communication module 251 or another function module.

The wireless communication module 252 may provide a solution that is applied to the mobile phone 200 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 252 may be one or more components integrating at least one communication processing module. The wireless communication module 252 receives an electromagnetic wave by using the antenna 2, performs frequency modulation and filtering processing on an electromagnetic wave signal, and sends the processed signal to the processor 210. The wireless communication module 252 may further receive a to-be-sent signal from the processor 210, perform frequency modulation and amplification on the to-be-sent signal, and convert, by using the antenna 2, the signal into an electromagnetic wave for radiation. In this embodiment of this application, the wireless communication module 252 is configured to transmit data to another terminal device under control of the processor 210. For example, when the processor 210 runs the font library synchronization method provided in embodiments of this application, the processor may control the wireless communication module 252 to send font library data to the another terminal device, and may further receive a notification and information sent by the another terminal device, to synchronize a font library of the terminal device.

In addition, the mobile phone 200 may implement an audio function, for example, music playing and recording, by using the audio module 270, the speaker 270A, the receiver 270B, the microphone 270C, the headset jack 270D, the application processor, and the like. The mobile phone 200 may receive an input from the button 290, and generate a button signal input related to a user setting and function control of the mobile phone 200. The mobile phone 200 may generate a vibration prompt (for example, an incoming call vibration prompt) by using the motor 291. The indicator 292 in the mobile phone 200 may be an indicator light, may be configured to indicate a charging status and a power change, or may be configured to indicate a message, a missed call, a notification, and the like. The SIM card interface 295 in the mobile phone 200 is configured to connect to a SIM card. A SIM card may be inserted into the SIM card interface 295 or removed from the SIM card interface 295, to implement contact with or separation from the mobile phone 200.

It should be understood that during actual application, the mobile phone 200 may include more or fewer components than those shown in FIG. 14. This is not limited in this embodiment of this application. The mobile phone 200 shown in the figure is merely an example, and the mobile phone 200 may have more or fewer components than those shown in the figure, two or more components may be combined, or different component configurations may be used. Various components shown in the figure may be implemented in hardware including one or more signal processing and/or application-specific integrated circuits, software, or a combination of hardware and software.

A software system of a terminal device may use a layered architecture, an event-driven architecture, a microkernel architecture, a micro service architecture, or a cloud architecture. In embodiments of this application, an Android system with a layered architecture is used as an example to describe a software structure of the terminal device.

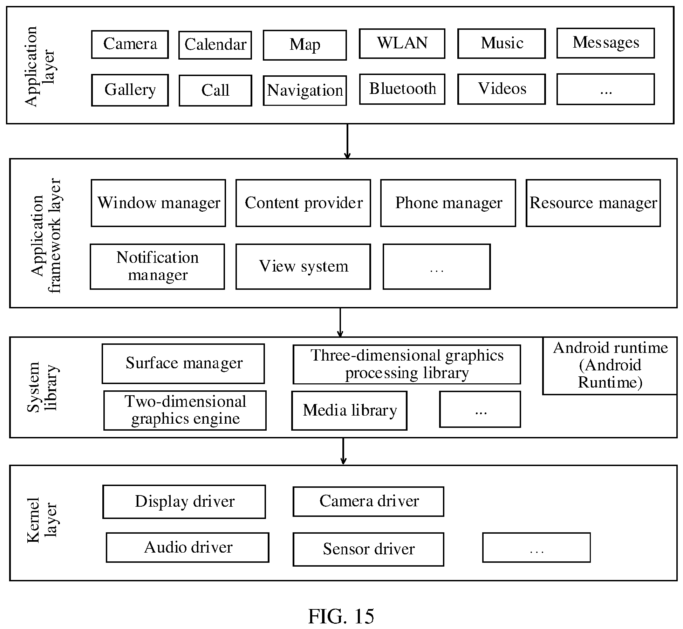

FIG. 15 is a block diagram of a software structure of a terminal device according to an embodiment of this application.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 15, the application packages may include applications such as Phone, Camera, Gallery, Calendar, Call, Map, Navigation, WLAN, Bluetooth, Music, Videos, and Massages.

The application framework layer provides an application programming interface (application programming interface, API) and a programming framework for an application at the application layer. The application framework layer includes some predefined functions.

As shown in FIG. 15, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application program. The data may include a video, an image, an audio, calls that are made and answered, a browsing history and bookmarks, an address book, and the like.

The view system includes visual controls such as a control for displaying a word and a control for displaying an image. The view system may be configured to construct an application program. A display interface may include one or more views. For example, a display interface including an SMS message notification icon may include a word display view and an image display view.

The phone manager is configured to provide a communication function of the terminal device, for example, management of call statuses (including answering, declining, and the like).

The resource manager provides various resources such as a localized character string, an icon, an image, a layout file, and a video file for an application program.

The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the terminal device vibrates, or an indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

An embodiment of this application provides a font library synchronization apparatus. The apparatus includes a processor, and a memory configured to store instructions executable by the processor. When executing the instructions, the processor is configured to implement the foregoing methods.

An embodiment of this application provides a non-volatile computer-readable storage medium, where the non-volatile computer-readable storage medium stores computer program instructions. When the computer program instructions are executed by a processor, the foregoing methods are implemented.

An embodiment of this application provides a terminal device, and the terminal device may perform the foregoing methods.

An embodiment of this application provides a computer program product, including computer-readable code or a non-volatile computer-readable storage medium carrying computer-readable code. When the computer-readable code is run in a processor of an electronic device, the processor in the electronic device performs the foregoing methods.

The computer-readable storage medium may be a tangible device that may retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (non-exhaustive list) of the computer-readable storage medium include: a portable computer disk, a hard disk, a random access memory (Random Access Memory, RAM), a read-only memory (Read Only Memory, ROM), an erasable programmable read-only memory (Erasable Programmable Read-Only-Memory, EPROM, or flash memory), a static random access memory (Static Random-Access Memory, SRAM), a portable compact disc read-only memory (Compact Disc Read-Only Memory, CD-ROM), a digital versatile disc (Digital Versatile Disc, DVD), a memory stick, a floppy disk, a mechanical coding device, for example, a punching card or a groove protrusion structure that stores instructions, and any suitable combination thereof.

The computer-readable program instructions or code described herein may be downloaded from a computer-readable storage medium to each computing/processing device, or downloaded to an external computer or an external storage device over a network, such as the Internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives computer-readable program instructions from a network, and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include object-oriented programming languages such as Smalltalk and C++, and a conventional procedural programming language such as "C" or a similar programming language. The computer-readable program instructions may be executed entirely on a user computer, partly on the user computer, as a stand-alone software package, partly on the user computer and partly on a remote computer, or entirely on the remote computer or a server. When a remote computer is involved, the remote computer may be connected to a user computer over any type of network, including a local area network (Local Area Network, LAN) or a wide area network (Wide Area Network, WAN), or may be connected to an external computer (for example, connected by using an Internet service provider over the Internet). In some embodiments, an electronic circuit, for example, a programmable logic circuit, a field programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/actions specified in one or more blocks in the flowcharts and/or the block diagrams. Alternatively, these computer-readable program instructions may be stored in a computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowcharts and/or the block diagrams.

Alternatively, these computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implements functions/actions specified in one or more blocks in the flowcharts and/or the block diagrams.

The flowcharts and the block diagrams in the appended drawings illustrate system architectures, functions, and operations of possible implementations of apparatuses, systems, methods, and computer program products according to a plurality of embodiments of this application. In this regard, each block in the flowcharts or the block diagrams may represent a module, a program segment, or a part of the instructions, where the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse order, depending on a function involved.

It should also be noted that each block in the block diagrams and/or the flowcharts and a combination of blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, the disclosed content, and the accompanying claims. **In** the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A font library synchronization method, wherein the method is applied to a first terminal device, and the method comprises:
identifying (S41) font library data information of font library data required for displaying a first message, wherein the first message is a message to be sent to a second terminal device;
identifying (S42), based on a font library synchronization record corresponding to the second terminal device, first font library data information of font library data that has not been synchronized to the second terminal device in the font library data information, wherein the font library synchronization record comprises font library data information of font library data that has been synchronized from the first terminal device to the second terminal device; and
sending (S43), to the second terminal device, first font library data corresponding to the first font library data information,
wherein the method further comprises:
receiving (S51) initial information sent by the second terminal device, wherein the initial information comprises initial font library data information of the second terminal device;
determining (S52) an initial language of the second terminal device based on the initial information;
when a current language of the first terminal device is inconsistent with the initial language of the second terminal device, generating (S53) second font library data based on the current language of the first terminal device and the initial information; and
sending (S54) the second font library data to the second terminal device.

2. The method according to claim 1, wherein the method further comprises:
receiving a synchronization completion notification sent by the second terminal device, wherein the synchronization completion notification indicates that the first font library data has been synchronized to the second terminal device; and
in response to the received synchronization completion notification, updating the font library synchronization record corresponding to the second terminal device, so that an updated font library synchronization record comprises the first font library data information.

3. The method according to claim 1, wherein the method further comprises:
receiving (S61) aging information sent by the second terminal device, wherein the aging information indicates third font library data information of third font library data that meets a deletion condition in font library data of the second terminal device;
deleting (S62), based on the aging information, a synchronization record corresponding to the third font library data information from the font library synchronization record corresponding to the second terminal device; and
sending (S63), to the second terminal device, a notification indicating that deletion of the synchronization record corresponding to the third font library data information is completed, so that the second terminal device deletes the third font library data.

4. The method according to claim 1, wherein the method further comprises:
receiving (S71) upgrade information, wherein the upgrade information comprises fourth font library data information of font library data required for font library upgrade of the second terminal device;
when the font library synchronization record corresponding to the second terminal device does not comprise the fourth font library data information, generating (S72) fourth font library data based on the fourth font library data information;
sending (S73) the fourth font library data to the second terminal device;
receiving (S74) an upgrade completion notification sent by the second terminal device, wherein the upgrade completion notification indicates that the fourth font library data has been synchronized to the second terminal device; and
updating (S75), based on the upgrade completion notification, the font library synchronization record corresponding to the second terminal device, so that an updated font library synchronization record comprises the fourth font library data information.

5. The method according to any one of claims 1 to 4, wherein the font library data information comprises one or more of a language, a character encoding range, a font, and a font size.

6. A font library synchronization method, wherein the method is applied to a second terminal device, and the method comprises:
receiving (S81) first font library data sent by a first terminal device;
adding (S82) the first font library data to font library data of the second terminal device; and
receiving (S83) a first message sent by the first terminal device, and displaying the first message based on the font library data of the second terminal device, wherein the first font library data is font library data that is identified by the first terminal device and required for displaying the first message,
wherein the method further comprises:
sending (S91) initial information to the first terminal device, wherein the initial information comprises initial font library data information of the second terminal device;
when a current language of the first terminal device is inconsistent with an initial language of the second terminal device, receiving (S92) second font library data sent by the first terminal device; and
adding (S93) the second font library data to the font library data of the second terminal device.

7. The method according to claim 6, wherein the method further comprises:
sending a synchronization completion notification to the first terminal device, so that the first terminal device updates a font library synchronization record corresponding to the second terminal device, wherein
the synchronization completion notification indicates that the first font library data has been synchronized to the second terminal device, and the font library synchronization record comprises font library data information of font library data that has been synchronized from the first terminal device to the second terminal device.

8. The method according to claim 6, wherein the method further comprises:
sending (S1001) aging information to the first terminal device, wherein the aging information indicates third font library data information of third font library data that meets a deletion condition in the font library data of the second terminal device;
receiving (S1002) a notification, sent by the first terminal device, indicating that deletion of a synchronization record corresponding to the third font library data information is completed; and
deleting (S1003) the third font library data from the font library data of the second terminal device in response to the received notification indicating that deletion of the synchronization record corresponding to the third font library data information is completed.

9. The method according to claim 8, wherein the third font library data that meets the deletion condition comprises:
third font library data whose usage is less than a first threshold within a predetermined time period in the font library data; and/or
third font library data whose usage is less than a third threshold in the font library data when a storage amount of the font library data is greater than a second threshold, wherein the third threshold is determined based on the second threshold, so that the storage amount of the font library data is not greater than the second threshold after the third font library data is deleted.

10. The method according to claim 6, wherein the method further comprises:
sending (S1101) upgrade information to the first terminal device, wherein the upgrade information comprises fourth font library data information of fourth font library data required for font library upgrade of the second terminal device;
receiving (S1102) the fourth font library data;
adding (S1103) the fourth font library data to the font library data of the second terminal device; and
sending (S1104) an upgrade completion notification to the first terminal device, so that the first terminal device updates a font library synchronization record corresponding to the second terminal device, wherein the upgrade completion notification indicates that the fourth font library data has been synchronized to the second terminal device.

11. The method according to any one of claims 6 to 10, wherein the font library data information comprises one or more of a language, a character encoding range, a font, and a font size.

12. A font library synchronization apparatus, wherein the apparatus comprises:
a processor; and
a memory configured to store instructions executable by the processor, wherein
the processor is configured to implement the method according to any one of claims 1 to 5 or the method according to any one of claims 6 to 11 when executing the instructions.

13. A non-volatile computer-readable storage medium, storing computer program instructions, wherein when the computer program instructions are executed by a processor, the method according to any one of claims 1 to 5 or the method according to any one of claims 6 to 11 is implemented.

## Patentansprüche

1. Schriftartbibliothekssynchronisierungsverfahren, wobei das Verfahren auf eine erste Endgeräteeinrichtung angewandt wird und das Verfahren Folgendes umfasst:
Identifizieren (S41) von Schriftartbibliotheksdateninformationen von Schriftartbibliotheksdaten, die zum Anzeigen einer ersten Nachricht erforderlich sind, wobei die erste Nachricht eine Nachricht ist, die an eine zweite Endgeräteeinrichtung zu senden ist;
Identifizieren (S42), basierend auf einer Schriftartbibliothekssynchronisierungsaufzeichnung, die der zweiten Endgeräteeinrichtung entspricht, erster Schriftartbibliotheksdateninformationen von Schriftartbibliotheksdaten, die nicht mit der zweiten Endgeräteeinrichtung in den Schriftartbibliotheksdateninformationen synchronisiert sind, wobei die Schriftartbibliothekssynchronisierungsaufzeichnung Schriftartbibliotheksdateninformationen von Schriftartbibliotheksdaten umfasst, die aus der ersten Endgeräteeinrichtung mit der zweiten Endgeräteeinrichtung synchronisiert worden sind; und
Senden (S43), an die zweite Endgeräteeinrichtung, erster Schriftartbibliotheksdaten, die den ersten Schriftartbibliotheksdateninformationen entsprechen, wobei das Verfahren ferner Folgendes umfasst:
Empfangen (S51) anfänglicher Informationen, die durch die zweite Endgeräteeinrichtung gesendet werden, wobei die anfänglichen Informationen anfängliche Schriftartbibliotheksdateninformationen der zweiten Endgeräteeinrichtung umfassen;
Bestimmen (S52) einer anfänglichen Sprache der zweiten Endgeräteeinrichtung basierend auf den anfänglichen Informationen;
wenn eine aktuelle Sprache der ersten Endgeräteeinrichtung nicht mit der anfänglichen Sprache der zweiten Endgeräteeinrichtung übereinstimmt, Erzeugen (S53) zweiter Schriftartbibliotheksdaten basierend auf der aktuellen Sprache der ersten Endgeräteeinrichtung und den anfänglichen Informationen; und
Senden (S54) der zweiten Schriftartbibliotheksdaten an die zweite Endgeräteeinrichtung.

2. Verfahren nach Anspruch 1, wobei das Verfahren ferner Folgendes umfasst:
Empfangen einer Synchronisierungserledigungsbenachrichtigung, die durch die zweite Endgeräteeinrichtung gesendet wird, wobei die Synchronisierungserledigungsbenachrichtigung angibt, dass die ersten Schriftartbibliotheksdaten mit der zweiten Endgeräteeinrichtung synchronisiert worden sind; und
als Reaktion auf die empfangene Synchronisierungserledigungsbenachrichtigung, Aktualisieren der Schriftartbibliothekssynchronisierungsaufnahme, die der zweiten Endgeräteeinrichtung entspricht, sodass eine aktualisierte Schriftartbibliothekssynchronisierungsaufnahme die ersten Schriftartbibliotheksdateninformationen umfasst.

3. Verfahren nach Anspruch 1, wobei das Verfahren ferner Folgendes umfasst:
Empfangen (S61) von Alterungsinformationen, die durch die zweite Endgeräteeinrichtung gesendet werden, wobei die Alterungsinformationen dritte Schriftartbibliotheksdateninformationen dritter Schriftartbibliotheksdaten angeben, die eine Löschbedingung in Schriftartbibliotheksdaten der zweiten Endgeräteeinrichtung erfüllen;
Löschen (S62), basierend auf den Alterungsinformationen, einer Synchronisierungsaufnahme, die den dritten Schriftartbibliotheksdateninformationen entspricht, aus der Schriftartbibliothekssynchronisierungsaufnahme, die der zweiten Endgeräteeinrichtung entspricht; und
Senden (S63), an die zweite Endgeräteeinrichtung, einer Benachrichtigung, die angibt, dass die Löschung der Synchronisierungsaufnahme, die den dritten Schriftartbibliotheksdateninformationen entspricht, erledigt ist, sodass die zweite Endgeräteeinrichtung die dritten Schriftartbibliotheksdaten löscht.

4. Verfahren nach Anspruch 1, wobei das Verfahren ferner Folgendes umfasst:
Empfangen (S71) von Aufrüstungsinformationen, wobei die Aufrüstungsinformationen vierte Schriftartbibliotheksdateninformationen von Schriftartbibliotheksdaten umfassen, die für eine Schriftartbibliotheksaufrüstung der zweiten Endgeräteeinrichtung erforderlich sind;
wenn die Schriftartbibliothekssynchronisierungsaufnahme, die der zweiten Endgeräteeinrichtung entspricht, die vierten Schriftartbibliotheksdateninformationen nicht umfasst, Erzeugen (S72) vierter Schriftartbibliotheksdaten basierend auf den vierten Schriftartbibliotheksdateninformationen;
Senden (S73) der vierten Schriftartbibliotheksdaten an die zweite Endgeräteeinrichtung;
Empfangen (S74) einer Aufrüstungserledigungsbenachrichtigung, die durch die zweite Endgeräteeinrichtung gesendet wird, wobei die Aufrüstungserledigungsbenachrichtigung angibt, dass die vierten Schriftartbibliotheksdaten mit der zweiten Endgeräteeinrichtung synchronisiert worden sind; und
Aktualisieren (S75), basierend auf der Aufrüstungserledigungsbenachrichtigung, der Schriftartbibliothekssynchronisierungsaufnahme, die der zweiten Endgeräteeinrichtung entspricht, sodass eine aktualisierte Schriftartbibliothekssynchronisierungsaufnahme die vierten Schriftartbibliotheksdateninformationen umfasst.

5. Verfahren nach einem der Ansprüche 1 bis 4, wobei die Schriftartbibliotheksdateninformationen eines oder mehrere einer Sprache, eines Zeichencodierungsbereichs, einer Schriftart und einer Schriftartgröße umfassen.

6. Schriftartbibliothekssynchronisierungsverfahren, wobei das Verfahren auf eine zweite Endgeräteeinrichtung angewandt wird und das Verfahren Folgendes umfasst:
Empfangen (S81) erster Schriftartbibliotheksdaten, die durch eine erste Endgeräteeinrichtung gesendet werden;
Hinzufügen (S82) der ersten Schriftartbibliotheksdaten zu Schriftartbibliotheksdaten der zweiten Endgeräteeinrichtung; und
Empfangen (S83) einer ersten Nachricht, die durch die erste Endgeräteeinrichtung gesendet wird, und Anzeigen der ersten Nachricht basierend auf den Schriftartbibliotheksdaten der zweiten Endgeräteeinrichtung, wobei die ersten Schriftartbibliotheksdaten Schriftartbibliotheksdaten sind, die durch die erste Endgeräteeinrichtung identifiziert werden und zum Anzeigen der ersten Nachricht erforderlich sind, wobei das Verfahren ferner Folgendes umfasst:
Senden (S91) anfänglicher Informationen an die erste Endgeräteeinrichtung, wobei die anfänglichen Informationen anfängliche Schriftartbibliotheksdateninformationen der zweiten Endgeräteeinrichtung umfassen;
wenn eine aktuelle Sprache der ersten Endgeräteeinrichtung nicht mit einer anfänglichen Sprache der zweiten Endgeräteeinrichtung übereinstimmt, Empfangen (S92) zweiter Schriftartbibliotheksdaten, die durch die erste Endgeräteeinrichtung gesendet werden; und
Hinzufügen (S93) der zweiten Schriftartbibliotheksdaten zu den Schriftartbibliotheksdaten der zweiten Endgeräteeinrichtung.

7. Verfahren nach Anspruch 6, wobei das Verfahren ferner Folgendes umfasst:
Senden einer Synchronisierungserledigungsbenachrichtigung an die erste Endgeräteeinrichtung, sodass die erste Endgeräteeinrichtung eine Schriftartbibliothekssynchronisierungsaufnahme aktualisiert, die der zweiten Endgeräteeinrichtung entspricht, wobei
die Synchronisierungserledigungsbenachrichtigung angibt, dass die ersten Schriftartbibliotheksdaten mit der zweiten Endgeräteeinrichtung synchronisiert worden sind, und die Schriftartbibliothekssynchronisierungsaufnahme Schriftartbibliotheksdateninformationen von Schriftartbibliotheksdaten umfasst, die aus der ersten Endgeräteeinrichtung mit der zweiten Endgeräteeinrichtung synchronisiert worden sind.

8. Verfahren nach Anspruch 6, wobei das Verfahren ferner Folgendes umfasst:
Senden (S1001) von Alterungsinformationen an die erste Endgeräteeinrichtung, wobei die Alterungsinformationen dritte Schriftartbibliotheksdateninformationen dritter Schriftartbibliotheksdaten angeben, die eine Löschbedingung in den Schriftartbibliotheksdaten der zweiten Endgeräteeinrichtung erfüllen;
Empfangen (S1002) einer Benachrichtigung, die durch die erste Endgeräteeinrichtung gesendet wird und angibt, dass eine Löschung einer Synchronisierungsaufnahme, die den dritten Schriftartbibliotheksdateninformationen entspricht, erledigt ist; und
Löschen (S1003) der dritten Schriftartbibliotheksdaten aus den Schriftartbibliotheksdaten der zweiten Endgeräteeinrichtung als Reaktion auf die empfangene Benachrichtigung, die angibt, dass die Löschung der Synchronisierungsaufnahme, die den dritten Schriftartbibliotheksdateninformationen entspricht, erledigt ist.

9. Verfahren nach Anspruch 8, wobei die dritten Schriftartbibliotheksdaten, welche die Löschbedingung erfüllen, Folgendes umfassen:
dritte Schriftartbibliotheksdaten, deren Verwendung innerhalb eines vorbestimmten Zeitraums in den Schriftartbibliotheksdaten kleiner als ein erster Schwellenwert ist; und/oder
dritte Schriftartbibliotheksdaten, deren Verwendung in den Schriftartbibliotheksdaten kleiner als ein dritter Schwellenwert ist, wenn eine Speichermenge der Schriftartbibliotheksdaten größer als ein zweiter Schwellenwert ist, wobei der dritte Schwellenwert basierend auf dem zweiten Schwellenwert bestimmt wird, sodass die Speichermenge der Schriftartbibliotheksdaten nicht größer als der zweite Schwellenwert ist, nachdem die dritten Schriftartbibliotheksdaten gelöscht sind.

10. Verfahren nach Anspruch 6, wobei das Verfahren ferner Folgendes umfasst:
Senden (S1101) von Aufrüstungsinformationen an die erste Endgeräteeinrichtung, wobei die Aufrüstungsinformationen vierte Schriftartbibliotheksdateninformationen vierter Schriftartbibliotheksdaten umfassen, die für eine Schriftartbibliotheksaufrüstung der zweiten Endgeräteeinrichtung erforderlich sind;
Empfangen (S1102) der vierten Schriftartbibliotheksdaten;
Hinzufügen (S1103) der vierten Schriftartbibliotheksdaten zu den Schriftartbibliotheksdaten der zweiten Endgeräteeinrichtung; und
Senden (S1104) einer Aufrüstungserledigungsbenachrichtigung an die erste Endgeräteeinrichtung, sodass die erste Endgeräteeinrichtung eine Schriftartbibliothekssynchronisierungsaufnahme aktualisiert, die der zweiten Endgeräteeinrichtung entspricht, wobei die Aufrüstungserledigungsbenachrichtigung angibt, dass die vierten Schriftartbibliotheksdaten mit der zweiten Endgeräteeinrichtung synchronisiert worden sind.

11. Verfahren nach einem der Ansprüche 6 bis 10, wobei die Schriftartbibliotheksdateninformationen eines oder mehrere einer Sprache, eines Zeichencodierungsbereichs, einer Schriftart und einer Schriftartgröße umfassen.

12. Schriftartbibliothekssynchronisierungsvorrichtung, wobei die Vorrichtung Folgendes umfasst:
einen Prozessor; und
einen Speicher, der dazu konfiguriert ist, Anweisungen zu speichern, die durch den Prozessor ausführbar sind, wobei
der Prozessor dazu konfiguriert ist, das Verfahren nach einem der Ansprüche 1 bis 5 oder das Verfahren nach einem der Ansprüche 6 bis 11 beim Ausführen der Anweisungen umzusetzen.

13. Nichtflüchtiges computerlesbares Speichermedium, das Computerprogrammanweisungen speichert, wobei, wenn die Computerprogrammanweisungen durch einen Prozessor ausgeführt werden, das Verfahren nach einem der Ansprüche 1 bis 5 oder das Verfahren nach einem der Ansprüche 6 bis 11 umgesetzt wird.

## Revendications

1. Procédé de synchronisation de bibliothèques de polices de caractères, dans lequel le procédé est appliqué à un premier dispositif terminal, et le procédé comprend :
l'identification (S41) d'informations de données de bibliothèques de polices de caractères de données de bibliothèques de polices de caractères requises pour afficher un premier message, dans lequel le premier message est un message à envoyer à un second dispositif terminal ;
l'identification (S42), à partir d'un enregistrement de synchronisation de bibliothèques de polices de caractères correspondant au second dispositif terminal, de premières informations de données de bibliothèques de polices de caractères de données de bibliothèques de polices de caractères qui n'ont pas été synchronisées avec le second dispositif terminal dans les informations de données de bibliothèques de polices de caractères, dans lequel l'enregistrement de synchronisation de bibliothèques de polices de caractères comprend des informations de données de bibliothèques de polices de caractères de données de bibliothèques de polices de caractères qui ont été synchronisées du premier dispositif terminal au second dispositif terminal ; et
l'envoi (S43), au second dispositif terminal, de premières données de bibliothèques de polices de caractères correspondant aux premières informations de données de bibliothèques de polices de caractères, dans lequel le procédé comprend également :
la réception (S51) d'informations initiales envoyées par le second dispositif terminal, dans lequel les informations initiales comprennent des informations de données de bibliothèques de polices de caractères initiales du second dispositif terminal ;
la détermination (S52) d'un langage initial du second dispositif terminal à partir des informations initiales ;
lorsqu'un langage actuel du premier dispositif terminal est incompatible avec le langage initial du second dispositif terminal, la génération (S53) de deuxièmes données de bibliothèques de polices de caractères à partir du langage actuel du premier dispositif terminal et des informations initiales ; et
l'envoi (S54) des deuxièmes données de bibliothèques de polices au second dispositif terminal.

2. Procédé selon la revendication 1, dans lequel le procédé comprend également :
la réception d'une notification d'achèvement de synchronisation envoyée par le second dispositif terminal, dans lequel la notification d'achèvement de synchronisation indique que les premières données de bibliothèques de polices de caractères ont été synchronisées avec le second dispositif terminal ; et
en réponse à la réception de la notification d'achèvement de synchronisation, la mise à jour de l'enregistrement de synchronisation de bibliothèques de polices de caractères correspondant au second dispositif terminal, de sorte qu'un enregistrement de synchronisation de bibliothèques de polices de caractères mis à jour comprenne les premières informations de données de bibliothèques de polices de caractères.

3. Procédé selon la revendication 1, dans lequel le procédé comprend également :
la réception (S61) des informations de vieillissement envoyées par le second dispositif terminal, dans lequel les informations de vieillissement indiquent des troisièmes informations de données de bibliothèques de polices de caractères de troisièmes données de bibliothèques de polices de caractères qui répondent à une condition de suppression dans les données de bibliothèques de polices de caractères du second dispositif terminal ;
la suppression (S62), à partir des informations de vieillissement, d'un enregistrement de synchronisation correspondant aux troisièmes informations de données de bibliothèques de polices de caractères de l'enregistrement de synchronisation de bibliothèques de polices de caractères correspondant au second dispositif terminal ; et
l'envoi (S63), au second dispositif terminal, d'une notification indiquant que la suppression de l'enregistrement de synchronisation correspondant aux troisièmes informations de données de bibliothèques de polices de caractères est terminée, de sorte que le second dispositif terminal supprime les troisièmes données de bibliothèques de polices de caractères.

4. Procédé selon la revendication 1, dans lequel le procédé comprend également :
la réception (S71) des informations de mise à niveau, dans lequel les informations de mise à niveau comprennent de quatrièmes informations de données de bibliothèques de polices de caractères de données de bibliothèques de polices de caractères requises pour la mise à niveau des bibliothèques de polices de caractères du second dispositif terminal ;
lorsque l'enregistrement de synchronisation de bibliothèques de polices de caractères correspondant au second dispositif terminal ne comprend pas les quatrièmes informations de données de bibliothèques de polices de caractères, la génération (S72) de quatrièmes données de bibliothèques de polices de caractères à partir des quatrièmes informations de données de bibliothèques de polices de caractères ;
l'envoi (S73) des quatrièmes données de bibliothèques de polices de caractères au second dispositif terminal ;
la réception (S74) d'une notification d'achèvement de mise à niveau envoyée par le second dispositif terminal, dans lequel la notification d'achèvement de mise à niveau indique que les quatrièmes données de bibliothèques de polices de caractères ont été synchronisées avec le second dispositif terminal ; et
la mise à jour (S75), à partir de la notification d'achèvement de mise à niveau, de l'enregistrement de synchronisation de bibliothèques de polices de caractères correspondant au second dispositif terminal, de sorte qu'un enregistrement de synchronisation de bibliothèques de polices de caractères mis à jour comprenne les quatrièmes informations de données de bibliothèques de polices de caractères.

5. Procédé selon l'une quelconque des revendications 1 à 4, dans lequel les informations de données de bibliothèques de polices de caractères comprennent un ou plusieurs éléments parmi un langage, une plage de codage de caractères, une police de caractères et une taille de police de caractères.

6. Procédé de synchronisation de bibliothèques de polices de caractères, dans lequel le procédé est appliqué à un second dispositif terminal, et le procédé comprend :
la réception (S81) de premières données de bibliothèques de polices de caractères envoyées par un premier dispositif terminal ;
l'ajout (S82) des premières données de bibliothèques de polices de caractères aux données de bibliothèques de polices de caractères du second dispositif terminal ; et
la réception (S83) d'un premier message envoyé par le premier dispositif terminal, et l'affichage du premier message à partir des données de bibliothèques de polices de caractères du second dispositif terminal, dans lequel les premières données de bibliothèques de polices de caractères sont des données de bibliothèques de polices de caractères qui sont identifiées par le premier dispositif terminal et requises pour afficher le premier message, dans lequel le procédé comprend également :
l'envoi (S91) d'informations initiales au premier dispositif terminal, dans lequel les informations initiales comprennent des informations de données de bibliothèques de polices de caractères initiales du second dispositif terminal ;
lorsqu'un langage actuel du premier dispositif terminal est incompatible avec un langage initial du second dispositif terminal, la réception (S92) de deuxièmes données de bibliothèques de polices de caractères envoyées par le premier dispositif terminal ; et
l'ajout (S93) des deuxièmes données de bibliothèques de polices de caractères aux données de bibliothèques de polices de caractères du second dispositif terminal.

7. Procédé selon la revendication 6, dans lequel le procédé comprend également :
l'envoi d'une notification d'achèvement de synchronisation au premier dispositif terminal, de sorte que le premier dispositif terminal mette à jour un enregistrement de synchronisation de bibliothèques de polices de caractères correspondant au second dispositif terminal, dans lequel
la notification d'achèvement de synchronisation indique que les premières données de bibliothèques de polices de caractères ont été synchronisées avec le second dispositif terminal, et l'enregistrement de synchronisation de bibliothèques de polices de caractères comprend des informations de données de bibliothèques de polices de caractères de données de bibliothèques de polices de caractères qui ont été synchronisées du premier dispositif terminal au second dispositif terminal.

8. Procédé selon la revendication 6, dans lequel le procédé comprend également :
l'envoi (S1001) des informations de vieillissement au premier dispositif terminal, dans lequel les informations de vieillissement indiquent des troisièmes informations de données de bibliothèques de polices de caractères de troisièmes données de bibliothèques de polices de caractères qui répondent à une condition de suppression dans les données de bibliothèques de polices de caractères du second dispositif terminal ;
la réception (S1002) d'une notification, envoyée par le premier dispositif terminal, indiquant que la suppression d'un enregistrement de synchronisation correspondant aux troisièmes informations de données de bibliothèques de polices de caractères est terminée ; et
la suppression (S1003) des troisièmes données de bibliothèques de polices de caractères des données de bibliothèques de polices de caractères du second dispositif terminal en réponse à la notification reçue indiquant que la suppression de l'enregistrement de synchronisation correspondant aux troisièmes informations de données de bibliothèques de polices de caractères est terminée.

9. Procédé selon la revendication 8, dans lequel les troisièmes données de bibliothèques de polices de caractères qui remplissent la condition de suppression comprennent :
des troisièmes données de bibliothèques de polices de caractères dont l'utilisation est inférieure à un premier seuil dans une période de temps prédéterminée dans les données de bibliothèques de polices de caractères ; et/ou
des troisièmes données de bibliothèques de polices de caractères dont l'utilisation est inférieure à un troisième seuil dans les données de bibliothèques de polices de caractères lorsqu'une quantité de stockage des données de bibliothèques de polices de caractères est supérieure à un deuxième seuil, dans lequel le troisième seuil est déterminé à partir du deuxième seuil, de sorte que la quantité de stockage des données de bibliothèques de polices de caractères ne soit pas supérieure au deuxième seuil après la suppression des troisièmes données de bibliothèques de polices de caractères.

10. Procédé selon la revendication 6, dans lequel le procédé comprend également :
l'envoi (S1101) d'informations de mise à niveau au premier dispositif terminal, dans lequel les informations de mise à niveau comprennent des quatrièmes informations de données de bibliothèques de polices de caractères de quatrièmes données de bibliothèques de polices de caractères requises pour la mise à niveau des bibliothèques de polices de caractères du second dispositif terminal ;
la réception (S1102) des quatrièmes données de bibliothèques de polices de caractères ;
l'ajout (S1103) des quatrièmes données de bibliothèques de polices de caractères aux données de bibliothèques de polices de caractères du second dispositif terminal ; et
l'envoi (S1104) d'une notification d'achèvement de mise à niveau au premier dispositif terminal, de sorte que le premier dispositif terminal mette à jour un enregistrement de synchronisation de bibliothèques de polices de caractères correspondant au second dispositif terminal, dans lequel la notification d'achèvement de mise à niveau indique que les quatrièmes données de bibliothèques de polices de caractères ont été synchronisées avec le second dispositif terminal.

11. Procédé selon l'une quelconque des revendications 6 à 10, dans lequel les informations de données de bibliothèques de polices de caractères comprennent un ou plusieurs éléments parmi un langage, une plage de codage de caractères, une police de caractères et une taille de police de caractères.

12. Appareil de synchronisation de bibliothèques de polices de caractères, dans lequel l'appareil comprend :
un processeur ; et
une mémoire configurée pour stocker des instructions exécutables par le processeur, dans lequel
le processeur est configuré pour mettre en œuvre le procédé selon l'une quelconque des revendications 1 à 5 ou le procédé selon l'une quelconque des revendications 6 à 11 lors de l'exécution des instructions.

13. Support de stockage lisible par ordinateur non volatil, stockant des instructions de programme informatique, dans lequel lorsque les instructions de programme informatique sont exécutées par un processeur, le procédé selon l'une quelconque des revendications 1 à 5 ou le procédé selon l'une quelconque des revendications 6 à 11 est mis en œuvre.
